# EUROPÄISCHE PATENTSCHRIFT

(11) **EP 3 417 465 B1**
(45) Veröffentlichungstag und Bekanntmachung des Hinweises auf die Patenterteilung: **30.06.2021**
(21) Anmeldenummer: 17712915.2
(22) Anmeldetag: 10.02.2017
(51) Int. Cl.: H01H 3/02, G05B 9/02, H01H 9/16

(54) **STEUERUNGSSYSTEM FÜR ELEKTRISCH GESTEUERTE ANLAGEN**
CONTROL SYSTEM FOR ELECTRICALLY CONTROLLED INSTALLATIONS
SYSTÈME DE COMMANDE D'INSTALLATIONS COMMANDÉES ÉLECTRIQUEMENT

(30) Priorität: 18.02.2016 AT 501082016
(43) Veröffentlichungstag der Anmeldung: 26.12.2018
(60) Teilanmeldung: 21175708.3
(73) Patentinhaber: KEBA AG, 4041 Linz (AT)
(72) Erfinder: FISCHER, Harald, 5323 Ebenau (AT); KREUNDL, Robert, 4481 Asten (AT); LEHNER, Bernhard, 4242 Hirschbach (AT); PREISINGER, Gernot, 4030 Linz (AT); SCHININGER, Manfred, 4030 Linz (AT)
(74) Vertreter: Burger, Hannes
(86) Internationale Anmeldenummer: PCT/AT2017/060024
(87) Internationale Veröffentlichungsnummer: WO 2017/139817

(56) Entgegenhaltungen:
- EP-A1- 2 763 151
- DE-A1- 10 344 385
- DE-A1-102006 029 067
- DE-A1-102015 111 647
- DE-U1- 9 013 448
- US-A1- 2003 039 114
- US-A1- 2007 096 935
- US-A1- 2014 374 232

## Beschreibung

Die Erfindung betrifft ein Steuerungssystem für elektrisch gesteuerte Anlagen.

In der industriellen Praxis ist es üblich, Produktionsabläufe oder Fertigungsprozesse und Dergleichen mittels einer oder mehrerer voll- und/oder halbautomatisch gesteuerter Maschine(n), welche zum Teil in ausgedehnten Anlagen mit einer Vielzahl an Anlagenkomponenten zusammengefasst sein können, auszuführen. Hierbei umfassen diese Prozesse zum Beispiel oftmals Abläufe bzw. Bewegungen, bei welchen beteiligte Massen, Energien, Kräfte, Temperaturen, Strahlungen, Stoffe, etc. grundsätzlich zu einer Gefährdung für die Gesundheit oder sogar das Leben von Menschen führen können. Dies gilt meist insbesondere im Falle des Eintretens ungewöhnlicher bzw. nicht ordnungsgemäßer Ausnahmesituationen oder Fehlerfälle.

Daher ist es zweckmäßig und auch geläufig bzw. vorgeschrieben, im Umfeld bzw. im Bereich von Anlagenkomponenten bzw. Maschinen oder Maschinenteilen an leicht zugänglichen und einzusehenden Stellen manuell betätigbare Sicherheitsschaltelemente anzuordnen, um Bedienpersonen ein möglichst rasches Reagieren auf Gefahrensituationen zur eindeutigen Beendigung einer Gefahrensituation zu ermöglichen. Bei manueller Betätigung solcher Sicherheitsschaltelemente kann eine Anlage oder Anlagenkomponente bzw. Maschine in einen sicheren Zustand versetzt werden. Je nach Typ bzw. Ausgestaltung einer jeweiligen Anlage bzw. Anlagenkomponente kann eine Versetzung in einen sicheren Zustand bzw. Betriebszustand etwa durch Abschalten von Antriebsvorrichtungen bzw. Aktuatoren, Unterbrechen der Energiezufuhr, Aktivieren von Bremsvorrichtungen oder ähnlichen Maßnahmen bewerkstelligt werden.

Derartige Sicherheitsschaltelemente umfassen zum Beispiel die bekannten, pilzförmig ausgestalteten Not-Aus- bzw. Not-Halt-Schalter. Um solche Sicherheitsschaltelemente eindeutig und zweifelsfrei identifizieren zu können, sind in einschlägigen Normen spezifische, farbliche Kennzeichnungen hierfür vorgeschlagen, bzw. in vielen Fällen vorgeschrieben. Hierdurch ist beispielsweise ein Not-Aus-Schalter auch für Personen, welche zur Bedienung einer Anlage oder Anlagenkomponente nicht spezifisch geschult sind, ein entsprechend farblich gekennzeichneter Not-Aus-Schalter sowie dessen Wirkung dennoch eindeutig erkennbar bzw. geläufig.

Obwohl in der industriellen Fertigung die Prozesse und Abläufe größtenteils automatisiert von funktionalen, elektronischen Steuerungsvorrichtungen, welche funktionswirksam auf elektrisch steuerbare Komponenten einer Anlage einwirken können, vorgenommen werden, ist für bestimmte Abläufe bzw. Aufgaben eine manuelle Bedienung bzw. Steuerung durch eine menschliche Bedienperson zweckmäßig bzw. erforderlich. Beispiele hierfür sind etwa die Vornahme von Einstellungen oder eines Werkzeugwechsels, Behebung von Betriebsstörungen oder - fehlem, oder das sogenannte Teachen von Robotern.

Heutzutage werden für Abläufe bzw. Aufgaben, welche die manuelle Eingabe von Steuerungskommandos durch eine menschliche Bedienperson erfordern, häufig mobile bzw. transportable Bediengeräte verwendet. Solche mobilen Handbediengeräte erlauben einer Bedienperson eine gewisse Beweglichkeit im Bereich einer Anlage bzw. Maschine. Von Vorteil ist dabei, dass die Bedienperson während der manuellen Bedienung eine geeignete bzw. günstige Beobachtungsposition im Bereich einer Maschine einnehmen kann.

Grundsätzlich können derartige, mobile Handbediengeräte zur Bereitstellung bzw. Übertragung von Daten, Signalen und Steuerungskommandos über drahtgebundene oder drahtlose Kommunikationsverbindungen mit einer oder mehreren funktionalen Steuerungsvorrichtungen einer elektrisch steuerbaren Anlage und/oder Anlagenkomponente verbunden sein. Die Eingabe von Steuerungskommandos an einem solchen signal- und datentechnisch gekoppelten Handbediengerät kann über entsprechende Kommunikationsverbindungen an eine Steuerungsvorrichtung übertragen werden, welche Steuerungsvorrichtung sodann die übertragenen bzw. bereitgestellten Steuerungskommandos umgehend in entsprechende Steuerungssignale für Aktuatoren, Antriebe, Heiz- oder Kühlmittel, oder sonstige elektrisch steuerbare Maschinenkomponenten umsetzt. In sicherheitstechnischer Hinsicht ist in diesem Zusammenhang von großen Vorteil, wenn auch an einem Handbediengerät zumindest ein Sicherheitsschaltelement, beispielsweise in der Art eines Not-Aus- bzw. Not-Halt-Schalters vorgesehen ist.

Während fix bzw. permanent mit einer bestimmten Anlagenkomponente bzw. Maschine verbundene Handbediengeräte durchaus üblich sind, geht der Trend in der heutigen, industriellen Praxis vermehrt in Richtung variabler bzw. temporärer Zuordnung eines Handbediengeräts zu einer Anagenkomponente oder Maschine. In anderen Worten ausgedrückt wird vermehrt der Wunsch geäußert, ein Handbediengerät nur während jener Zeit steuerungstechnisch, insbesondere für die manuelle Eingabe von Steuerungskommandos mit einer funktionalen Steuerungsvorrichtung zu verbinden bzw. zu koppeln, in welcher Zeit manuelle Bedienhandlungen auch tatsächlich vorgenommen werden. Dies zumal auch deshalb, da im ordnungsgemäßen bzw. störungsfreien Automatikbetrieb einer Anlage bzw. Anlagenkomponente die Ankoppelung eines Handbediengerätes zur manuellen Bereitstellung von Steuerungskommandos nicht erforderlich ist. Im ordnungsgemäßen Automatikbetrieb kann eine Kommunikationsverbindung für die Übertragung bzw. Bereitstellung von manuell eingegebenen Steuerungskommandos daher aufgehoben werden, etwa durch Abstecken einer entsprechenden Kabelverbindung oder durch Unterbrechen einer entsprechenden kabellosen Funkverbindung oder auch durch Aufheben einer datentechnischen Kopplung in einem Kommunikationsnetzwerk. Hierdurch können auch potentielle Gefahren durch eine mögliche Fehlbedienung hintangehalten werden, etwa wenn eine Bedienperson ein Eingabeelement zum Auslösen eines Steuerungskommandos am Handbediengerät versehentlich betätigt, ohne sich im Nahbereich der entsprechenden Anlagenkomponente bzw. Maschine aufzuhalten.

Durch die lediglich temporäre, steuerungstechnische Wirkverbindung derartiger Handbediengeräte mit funktionalen Steuerungsvorrichtungen einer Anlage, ist aber auch eine unmittelbare Funktion von an dem Handbediengerät angeordneten Sicherheitsschaltelementen nur temporär gegeben. Insbesondere bei im Bereich einer Anlagenkomponente abgelegten Handbediengeräten ist für eine Bedienperson oder auch für nicht zur Bedienung der Anlage oder Anlagenkomponente bzw. Maschine vorgesehenen Drittpersonen oftmals nicht sofort bzw. unmittelbar ersichtlich, ob ein Handbediengerät mit einer Steuerungsvorrichtung der Anlage steuerungstechnisch kommunikationsverbunden ist, bzw. ob ein Sicherheitsschaltelement am Handbediengerät funktionswirksam betätigt werden kann. Als Abhilfe werden oftmals organisatorische Maßnahmen vorgeschrieben, gemäß derer ein nicht funktionswirksames Handbediengerät beispielsweise wegzuräumen bzw. aus dem Sichtbereich zu verbringen ist. In der Praxis werden solche organisatorischen Maßnahmen erfahrungsgemäß nur unvollständig umgesetzt. Folglich kann es grundsätzlich zu einem Irrtum betreffend die Funktionswirksamkeit eines an einem Handbediengerätes angeordneten Sicherheitsschaltelements kommen. Bei Auftreten einer akuten Gefahrensituation kann es in weiterer Folge bei einem Versuch der Beendigung der Gefahrensituation durch wirkungsloses Betätigen, beispielsweise eines Not-Halt-Sicherheitsschaltelements am Handbediengerät, zu einem Verstreichen wertvoller Zeit kommen.

In sicherheitstechnischer Hinsicht ist es daher unbedingt wünschenswert, dass für eine Bedienperson oder auch für Dritte die Funktionswirksamkeit respektive die Wirkungslosigkeit eines Sicherheitsschaltelements an einem Handbediengerät möglichst deutlich und unmissverständlich ersichtlich ist.

Aus dem Stand der Technik sind beleuchtete Not-Aus-Schalter mit lichtdurchlässigen bzw. semitransparenten Mantelflächen bekannt, bei welchen durch dem Not-Aus-Schalter zugeordnete, insbesondere durch in dem Not-Aus-Schalter integrierte Leuchtmittel der entsprechende Not-Aus-Schalter farblich kenntlich gemacht wird. In der EP 1780738 A1, der DE 19919012 A1, der JP 2004319258 A, der DE 102006029067 A1 oder DE10344385 A1 sind Not-Aus-Schaltelemente beschrieben, bei welchen im angesteckten bzw. angekoppelten Zustand eines Handbediengerätes die entsprechenden Leuchtmittel aktiviert sind, wohingegen im abgekoppelten Zustand des Handbediengerätes oder im Falle von stromlosen Handbediengeräten die Leuchtmittel deaktiviert sind. Im deaktivierten Zustand der Leuchtmittel erscheint der entsprechend nicht beleuchtete Not-Aus-Schalter in einer neutralen farblichen Kennzeichnung, beispielsweise milchig grau oder weiß.

Bei Anwendung von solchen aktiv beleuchteten Sicherheitsschaltelementen ergeben sich in der industriellen Praxis jedoch Problemstellungen, welche vom Stand der Technik bisher nicht berücksichtigt wurden. Insbesondere ist bei aktiv beleuchteten Sicherheitsschaltelementen mit konstanter Leuchtintensität die visuell wahrnehmbare bzw. visuell empfundene Helligkeitswahrnehmung und die farbliche Wahrnehmung durch menschliche Personen sehr stark von der jeweils vorherrschenden Umgebungshelligkeit abhängig. Deshalb kann bei aktiv mit gleichbleibender Leuchtintensität beleuchteten Sicherheitsschaltelementen nicht mit ausreichender Sicherheit gewährleistet werden, dass die Funktionswirksamkeit oder die Wirkungslosigkeit eines Sicherheitsschaltelementes bei wechselnden Umgebungshelligkeiten immer zuverlässig und eindeutig für menschliche Personen erkennbar ist und gleichzeitig eine ergonomische und insbesondere blendwirkungsfreie Verwendung der Handbediengeräte ermöglicht ist.

Des Weiteren kann insbesondere bei drahtlos datengekoppelten, Akku-betriebenen Handbediengeräten ein hoher Stromverbrauch resultieren, durch welchen die Funktionszeit eines Handbediengeräts reduziert werden kann. Dies auch deshalb, da beleuchtete Not-Aus-Schalter für eine zuverlässige Wahrnehmbarkeit auch bei hoher Umgebungshelligkeit, mit ausreichender, vergleichsweise starker Leuchtintensität beleuchtet werden müssen.

Die Dokumente US 2003/039114 A1, US 2007/096935 A1, DE 10 2015 111647 A1, DE 90 13 448 U1 und US 2014/374232 A1 offenbaren beleuchtete Schaltelemente mit unterschiedlichen nicht sicherheitsrelevanten Anwendungen, bei denen zur Verbesserung der Wahrnehmbarkeit bzw. der Erkennbarkeit eine Anpassung der visuell wahrnehmbaren Leuchtintensität erfolgt und zwar entsprechend der erfassten Intensität des Umgebungslichts bzw. der erfassten Benutzeraktivitäten.

Aufgabe der Erfindung war es, die bestehenden Probleme zu lösen, und ein verbessertes Steuerungssystem zur Verfügung zu stellen, durch welches insbesondere die umgebungshelligkeitsabhängige Wahrnehmung aktiv beleuchteter Sicherheitsschaltelemente durch menschliche Personen berücksichtigt ist.

Diese Aufgabe wird durch ein Steuerungssystem gemäß den Ansprüchen gelöst.

Es wird ein Steuerungssystem für elektrisch gesteuerte Anlagen bereitgestellt, welches wenigstens eine Steuerungsvorrichtung zur Überwachung und/oder Steuerung der Anlage und/oder von Anlagenkomponenten umfasst.

Des Weiteren umfasst das Steuerungssystem zumindest ein tragbares, mobiles Handbediengerät zur Anzeige von Informationen und zur Eingabe von Steuerungskommandos durch eine Bedienperson, wobei das Handbediengerät wenigstens ein manuell betätigbares Sicherheitsschaltelement aufweist, welchem Sicherheitsschaltelement eine Beleuchtungsvorrichtung mit wenigstens einem Leuchtmittel zugeordnet ist.

Das Steuerungssystem umfasst außerdem eine koppelbare und lösbare Signalverbindung zwischen dem Sicherheitsschaltelement des Handbediengeräts und der wenigstens einen Steuerungsvorrichtung oder einer separat ausgebildeten Sicherheitssteuerung, wobei das Steuerungssystem bei Vorliegen einer gekoppelten Signalverbindung und bei manueller Betätigung des Sicherheitsschaltelements zur Überführung der Anlage oder einer oder mehrerer Anlagenkomponenten in einen sicheren Zustand ausgebildet ist, und wobei das Steuerungssystem bei Vorliegen einer gekoppelten Signalverbindung zur Aktivierung der Beleuchtungsvorrichtung ausgebildet ist, und bei Vorliegen einer gelösten Signalverbindung zur Deaktivierung der Beleuchtungsvorrichtung ausgebildet ist.

Wesentlich ist, dass das Steuerungssystem zumindest eine Beleuchtungssteuerungsvorrichtung umfasst, welche bei Vorliegen einer gekoppelten Signalverbindung zwischen dem Sicherheitsschaltelement des Handbediengeräts und der wenigstens einen Steuerungsvorrichtung oder der Sicherheitssteuerung zur elektrisch und/oder elektronisch gesteuerten Anpassung einer visuell wahrnehmbaren Leuchtintensität der Beleuchtungsvorrichtung ausgebildet ist.

Hierbei ist es durchaus möglich, dass das Steuerungssystem mehrere Beleuchtungssteuerungsvorrichtungen umfasst, welche jeweils nach einer erfolgten Koppelung bzw. Herstellung einer Signalverbindung zwischen dem Sicherheitsschaltelement eines Handbediengeräts und einer Steuerungsvorrichtung des Steuerungssystems, zur Anpassung der visuell wahrnehmbaren Leuchtintensität der Beleuchtungsvorrichtung des Handbediengerätes ausgebildet sind.

Durch die angegebenen Merkmale ist ein technisches Mittel bereitgestellt, mittels welchem die visuell wahrnehmbare Leuchtintensität eines Sicherheitsschaltelementes grundsätzlich verändert werden kann, und insbesondere die visuell wahrnehmbare Leuchtintensität an jeweils vorherrschende Lichtverhältnisse bzw. an eine jeweilige Umgebungshelligkeit angepasst werden kann. Damit kann auch gewährleistet werden, dass die farbliche Kennzeichnung des Sicherheitsschaltelementes bei Vorliegen der gekoppelten Signalverbindung zwischen dem Sicherheitsschaltelement und der wenigstens einen Steuerungsvorrichtung, durch menschliche Personen, insbesondere Bedienpersonen zuverlässig wahrnehmbar ist.

Dadurch kann zum Beispiel hintangehalten werden, dass ein beleuchtetes Sicherheitsschaltelement bei hoher Umgebungshelligkeit, etwa bei gut ausgeleuchteten Arbeitsplätzen oder bei starker Sonneneinstrahlung, schlecht oder nicht mehr als funktionswirksam erkennbar ist.

Andererseits kann vermieden werden, dass für eine menschliche Bedienperson bei Arbeitsplätzen bzw. Anlagenkomponenten mit niedriger Umgebungshelligkeit bzw. schwacher Beleuchtung, etwa in einer Lackiereinrichtung, eine erhebliche Blendwirkung auftritt. Etwaige nachteilige Auswirkungen hinsichtlich der manuellen Bedienbarkeit einer derartigen, schwach beleuchteten Anlagenkomponente können so hintangehalten werden. Von großem Vorteil ist ein solches Steuerungssystem insbesondere für den Einsatz in ausgedehnten Arbeitsumgebungen bzw. Anlagen mit örtlich stark wechselnden Beleuchtungsverhältnissen.

Die Signalverbindung zwischen dem wenigstens einen Sicherheitsschaltelement des Handbediengerätes und der wenigstens einen Steuerungsvorrichtung kann grundsätzlich sowohl kabelgebunden oder drahtlos ausgeführt sein.

Zusätzlich ist durch die angegebenen Merkmale ein energieeffizienter Betrieb, insbesondere von Akku-betriebenen Handbediengeräten ermöglicht. Im Besonderen bei drahtlos daten- bzw. signalgekoppelten Handbediengeräten ist mit der Möglichkeit der Anpassung bzw. Reduktion der Leuchtintensität an ein in der jeweiligen Situation angemessenes bzw. notwendiges Maß, auch der Energieverbrauch auf ein notwendiges Maß beschränkbar und kann damit die Akku-Laufzeit bzw. die Funktionslaufzeit des Handbediengerätes vorteilhafterweise angehoben werden.

Bei einer Weiterbildung kann vorgesehen sein, dass der zumindest einen Beleuchtungssteuerungsvorrichtung wenigstens ein manuell verstellbares Eingabestellmittel funktionswirksam zugeordnet ist, wobei die Beleuchtungssteuerungsvorrichtung bei Vorliegen einer gekoppelten Signalverbindung zwischen dem Sicherheitsschaltelement und der wenigstens einen Steuerungsvorrichtung und bei Verstellung des Eingabestellmittels durch eine Bedienperson zur elektrisch und/oder elektronisch gesteuerten Anpassung der visuell wahrnehmbaren Leuchtintensität der Beleuchtungsvorrichtung auf Basis der jeweiligen Stellung des Eingabestellmittels ausgebildet ist.

Damit kann eine Bedienperson die visuell wahrnehmbare Leuchtintensität der Beleuchtungsvorrichtung und damit des Sicherheitsschaltelementes selbsttätig und entsprechend den jeweiligen individuellen Bedürfnissen der Bedienperson anpassen bzw. einstellen.

Es ist erfindungsgemäß vorgesehen, dass die zumindest eine Beleuchtungssteuerungsvorrichtung zur elektrisch und/oder elektronisch gesteuerten Anpassung der visuell wahrnehmbaren Leuchtintensität der Beleuchtungsvorrichtung innerhalb eines beschränkten Bereiches zwischen einer steuerungstechnisch vorgebbaren, minimalen Grenzintensität und einer steuerungstechnisch vorgebbaren, maximalen Grenzintensität ausgebildet ist.

Durch die minimale Grenzintensität ist eine visuell wahrnehmbare Mindestleuchtintensität vorgebbar, durch welche für eine zu erwartende Umgebungshelligkeit im Bereich einer bestimmten Anlagenkomponente bzw. an einem bestimmten Arbeitsplatz eine hinreichend sichere Wahrnehmung eines funktionswirksamen Sicherheitsschaltelementes ermöglicht ist. Durch die maximale Grenzintensität ist andererseits eine maximal einstellbare, visuell wahrnehmbare Leuchtintensität vorgebbar, durch welche für beleuchtungssensitive Arbeitsplätze, wie zum Beispiel Lackierkammern oder Dergleichen die Leuchtintensität beschränkt werden kann.

Die jeweiligen minimalen und/oder maximalen Grenzintensitäten können hierbei bei ausgedehnten Anlagen mit unterschiedlichen Umgebungshelligkeiten im Bereich der Anlagenkomponenten jeweils entsprechend anpassbar sein. Auf diese Weise ist außerdem eine manuelle Verstellung bzw. Anpassung der visuell wahrnehmbaren Leuchtintensität durch eine Bedienperson nur in dem beschränkten Bereich möglich, wodurch beispielsweise ungeeignete oder fehlerhafte bzw. zu niedrige oder zu hohe Leuchtintensitätseinstellungen hintangehalten werden können. Insbesondere kann so eine Beschädigung bzw. eine Verkürzung der Lebensdauer des oder der Leuchtmittel(s) der Beleuchtungsvorrichtung durch Einstellung zu hoher visuell wahrnehmbarer Leuchtintensitäten hintangehalten werden.

Bei einer weiteren Ausgestaltungsform kann vorgesehen sein, dass zumindest ein Erfassungsmittel zur Überwachung von Benutzeraktivitäten vorgesehen ist, welches Erfassungsmittel zur Signalisierung eines erfassten Vorliegens oder eines erfassten Nichtvorliegens von Benutzeraktivitäten gegenüber der zumindest einen Beleuchtungssteuerungsvorrichtung ausgebildet ist.

Dadurch ist ein Mittel bereitgestellt, mittels welchem festgestellt werden kann, ob ein Handbediengerät benutzt wird oder nicht benutzt wird. Durch Bereitstellung für bzw. Signalisierung dieser Information gegenüber der Beleuchtungssteuerungsvorrichtung, kann die Anpassung der Leuchtintensität der Beleuchtungsvorrichtung dementsprechend angepasst werden.

Beispielsweise kann eine Ausführungsform sinnvoll sein, bei welcher die zumindest eine Beleuchtungssteuerungsvorrichtung bei Vorliegen einer gekoppelten Signalverbindung und bei einer Signalisierung eines Vorliegens von Benutzeraktivitäten zur elektrisch und/oder elektronisch gesteuerten Anpassung der visuell wahrnehmbaren Leuchtintensität auf einen erstes, niedriges Niveau ausgebildet ist, und bei Vorliegen einer gekoppelten Signalverbindung und bei einer Signalisierung eines Nichtvorliegens von Benutzeraktivitäten zur elektrisch und/oder elektronisch gesteuerten Anpassung der visuell wahrnehmbaren Leuchtintensität auf ein zweites, im Vergleich zum ersten Niveau, höheres Niveau ausgebildet ist.

Auf diese Weise kann die visuell empfundene Leuchtintensität der Beleuchtungsvorrichtung bzw. des wenigstens einen Sicherheitsschaltelementes reduziert werden, wenn eine Bedienperson mittels des Handbediengerätes Bedien- oder Beobachtungsaufgaben ausführt. Dadurch können sowohl der Bedienungskomfort, als auch die Bedienungssicherheit und -zuverlässigkeit verbessert werden, insbesondere kann ein Arbeiten ohne Blendwirkung durch ein mit zu hoher Leuchtintensität beleuchtetes Sicherheitsschaltelement mit dem Handbediengerät ermöglicht werden. Im Falle eines Nichtvorliegens von Benutzeraktivitäten kann andererseits mittels der Beleuchtungssteuerungsvorrichtung die Leuchtintensität der Beleuchtungsvorrichtung und damit die Beleuchtungsstärke des Sicherheitsschaltelementes gesteigert werden, um das Sicherheitsschaltelement auch für Personen in größerer Entfernung zum Handbediengerät erkennbar und damit im Notfall einfach auffindbar zu machen.

Bei einer weiteren, zweckmäßigen Ausführungsform des Steuerungssystems kann vorgesehen sein, dass es wenigstens eine maschinenseitige Ankoppelungsgegenstelle umfasst, welche einer elektrische steuerbaren Anlagenkomponente ortsnah zugeordnet ist, wobei die wenigstens eine Ankoppelungsgegenstelle zumindest zur Herstellung und zum Lösen der Signalverbindung zwischen dem wenigstens einen Sicherheitsschaltelement des Handbediengeräts und einer Steuerungsvorrichtung der Anlage und/oder Anlagenkomponente ausgebildet ist.

Durch Zuordnung solcher Ankoppelgegenstellen jeweils zu bestimmten Anlagenkomponenten, kann eine Zuordnung eines Handbediengeräts bzw. dessen Sicherheitsschaltelement(en) zu unterschiedlichen Anlagenkomponenten erfolgen. Insbesondere können so unterschiedliche Lichtverhältnisse bzw. Umgebungshelligkeiten im ortsnahen Bereich der verschiedenen Anlagenkomponenten im Zuge der Planung der Sicherheitsmaßnahmen berücksichtigt werden. Gleichzeitig ist für eine Bedienperson eine verwechslungssichere und intuitive Möglichkeit zum Ankoppeln eines Handbediengerätes bereitgestellt.

Hierbei kann es zweckmäßig sein, dass der wenigstens einen Ankoppelungsgegenstelle eine Kennung zugeordnet ist, welche Kennung datentechnische Informationen hinsichtlich einer minimalen Grenzintensität und/oder eines optimalen Niveaus für die visuell wahrnehmbare Leuchtintensität im Bereich der zugeordneten Anlagenkomponente aufweist, und die zumindest eine Beleuchtungsteuerungsvorrichtung zur direkten Erfassung der Kennung oder zur indirekten Erfassung der Kennung via ein Kennungserfassungsmittel, und zur elektrisch oder elektronisch gesteuerten Anpassung der visuell wahrnehmbaren Leuchtintensität auf Basis der datentechnischen Informationen der Kennung ausgebildet ist.

Durch diese Ausführungsform kann für die zumindest eine Beleuchtungssteuerungsvorrichtung eine Information für die Anpassung der Leuchtintensität der Beleuchtungsvorrichtung bereitgestellt werden, welche die zu erwartenden Umgebungshelligkeitsverhältnisse im Bereich der betreffenden Anlagenkomponente berücksichtigt. Die Kennung kann beispielsweise als Datensatz in einem Speicherelement der Ankoppelungsgegenstelle hinterlegt sein, und bei Ankoppelung des Handbediengerätes von der zumindest einen Beleuchtungssteuerungsvorrichtung ausgelesen werden. Alternativ kann eine Kennung auch direkt in einem Speicherelement einer Beleuchtungssteuerungsvorrichtung selbst hinterlegt sein, und somit unmittelbar für die zumindest einen Beleuchtungssteuerungsvorrichtung bereitgestellt sein. Grundsätzlich ist auch eine sensorische Erfassung via eine Kennungserfassungsmittel einer entsprechend sensorisch erfassbar ausgestalteten Kennung denkbar, beispielsweise durch einen am Handbediengerät ausgestalteten Sensor. Auf Basis der durch die Kennung bereitgestellten, datentechnischen Informationen kann die Leuchtintensität der Beleuchtungsvorrichtung durch die Beleuchtungssteuerungsvorrichtung entsprechend angepasst werden. Die Kennung kann hierbei wenigstens eine datentechnische Information über ein minimal erforderliches Mindestniveau für die Leuchtintensität bzw. eine minimale Grenzintensität an einer jeweiligen Ankoppelungsgegenstelle bzw. einer Ankoppelungsgegenstelle zugeordneten Anlagenkomponente aufweisen, sowie zumindest eine datentechnische Information über ein optimalen Niveaus für die visuell wahrnehmbare Leuchtintensität im Bereich der entsprechenden Anlagenkomponente für die zumindest eine Beleuchtungssteuerungsvorrichtung bereitstellen.

Bei einer weiteren Ausgestaltungsform kann vorgesehen sein, dass die zumindest eine Beleuchtungssteuerungsvorrichtung wenigstens ein erstes Schaltmittel umfasst, und die Beleuchtungssteuerungsvorrichtung zur Aktivierung respektive Deaktivierung der Beleuchtungsvorrichtung durch Schalten des ersten Schaltmittels in einen elektrisch leitenden respektive einen elektrisch nichtleitenden Schaltzustand ausgebildet ist.

Diese Ausgestaltungsvariante erlaubt ein effizientes Ein- und Ausschalten der Beleuchtungsvorrichtung durch Zuschalten respektive Wegschalten bzw. Unterbrechen einer Energieversorgung für die Beleuchtungsvorrichtung.

Hierbei kann es zweckmäßig sein, dass die zumindest eine Beleuchtungssteuerungsvorrichtung zur variablen Anpassung der Energieversorgung für die Beleuchtungsvorrichtung ausgebildet ist. Beispielsweise kann die Beleuchtungssteuerungsvorrichtung zur Versorgung der Beleuchtungsvorrichtung mit elektrischem Strom mit variabler Spannung und/oder variabler Stromstärke ausgebildet sein. Auf diese Weise ist in der Folge eine variable Anpassung der visuell wahrnehmbaren Leuchtintensität der Beleuchtungsvorrichtung ermöglicht.

Es kann aber auch zweckmäßig sein, dass die zumindest eine Beleuchtungssteuerungsvorrichtung zur elektrisch und/oder elektronisch gesteuerten Anpassung der visuell wahrnehmbaren Leuchtintensität der Beleuchtungsvorrichtung durch Beaufschlagung des ersten Schaltmittels mit einem pulsweitenmodulierten Ansteuerungssignal ausgebildet ist.

Diese Ausgestaltungsvariante erlaubt eine schaltungstechnisch einfache aber dennoch effiziente Ansteuerung der Beleuchtungsvorrichtung bzw. deren visuell wahrnehmbare Leuchtintensität. Die visuell wahrnehmbare Leuchtintensität kann hierbei von der Beleuchtungssteuerungsvorrichtung durch Variation des Puls-Pause-Verhältnisses des pulsweitenmodulierten Ansteuerungssignals geregelt bzw. vorgegeben werden. Durch Verlängerung der Pauseintervalle des pulsweitenmodulierten Ansteuerungssignals kann beispielsweise die visuell wahrnehmbare Leuchtintensität verringert werden, wobei die visuell wahrgenommene bzw. empfundene Leuchtintensität der Beleuchtungsvorrichtung bzw. des Sicherheitsschaltelements durch die Reaktionsträgheit des menschlichen Auges resultiert. Insbesondere wird von einem menschlichen Auge bei hinreichend kurzer Dauer und hinreichend kurz aufeinanderfolgender Abfolge bzw. Taktfrequenz der Pulsintervalle und der Pauseintervalle, nur die durchschnittliche Leuchtintensität wahrgenommen, wie dies an sich bekannt ist. Durch Ansteuerung bzw. Regelung der Beleuchtungsvorrichtung über ein pulsweitenmodulierten Ansteuerungssignal ist außerdem ein hoher Energiewirkungsgrad für das oder die Leuchtmittel der Beleuchtungsvorrichtung erzielbar.

Hinsichtlich sicherheitstechnischer Gesichtspunkte kann es zusätzlich sinnvoll sein, dass die zumindest eine Beleuchtungssteuerungsvorrichtung zur Aktivierung respektive Deaktivierung der Beleuchtungsvorrichtung ein zweites, schaltbares Schaltmittel umfasst, welches zweite Schaltmittel elektrisch in Serie mit dem ersten Schaltmittel geschaltet ist.

Auf diese Weise ist eine technisch redundante Ausführungsform zur Deaktivierung der Beleuchtungsvorrichtung bereitgestellt. Insbesondere kann auch bei einem Ausfall eines der Schaltmittel bzw. bei einem fehlerhaften ersten oder zweiten Schaltmittel mittels des jeweils anderen Schaltmittels die Beleuchtungsvorrichtung durch Unterbrechung deren Energieversorgung zuverlässig abgeschaltet werden. So ist auch das Risiko einer falschen bzw. für eine Person irreführenden Signalisierung einer Funktionswirksamkeit des Sicherheitsschaltelementes minimiert. Auch das zweite Schaltmittel kann natürlich mit einem pulsweitenmodulierten Ansteuerungssignal von der Beleuchtungssteuerungsvorrichtung grundsätzlich beaufschlagt werden.

In diesem Zusammenhang kann es auch zweckmäßig sein, dass der zumindest einen Beleuchtungssteuerungsvorrichtung zumindest ein Überprüfungsmittel zur Überprüfung des Leitungszustandes bzw. Schaltzustandes des oder der Schaltmittel(s)zugeordnet ist, und die Beleuchtungssteuerungsvorrichtung bei Vorliegen eines deaktivierten Zustands der Beleuchtungsvorrichtung zur Überprüfung des ordnungsgemäßen nichtleitenden Zustandes des oder der Schaltmittel mittels des zumindest einen Überprüfungsmittels ausgebildet ist.

Dadurch ist ein weiteres sicherheitstechnisches Merkmal geschaffen, mittels welchem eine Deaktivierung der Beleuchtungsvorrichtung zuverlässig von der zumindest einen Beleuchtungssteuerungsvorrichtung überwacht werden kann. Das Überprüfungsmittel kann beispielsweise durch ein Strommessmittel gebildet sein, welches zur Überwachung eines nichtleitenden Zustandes der Energieversorgungsleitung für die Beleuchtungsvorrichtung ausgebildet ist. Alternativ kann das Überprüfungsmittel auch durch einen der Beleuchtungsvorrichtung oder dem Sicherheitsschaltelement zugeordneten, lichterfassenden Sensor gebildet sein, welcher zur Detektion einer deaktivierten, also nichtleuchtenden Beleuchtungsvorrichtung ausgebildet ist.

Hierbei kann außerdem vorgesehen sein, dass die zumindest eine Beleuchtungssteuerungsvorrichtung zur Ausführung eines Testzyklus ausgebildet ist, welcher Testzyklus in periodischer Abfolge abwechselnd jeweils die Schaltung eines der Schaltmittel in einen nichtleitenden Zustand umfasst, und die gleichzeitige Schaltung des oder der anderen Schaltmittel in einen leitenden Zustand umfasst.

Durch Ausführung eines solchen Testzyklus kann mittels des Überprüfungsmittels die Funktionsfähigkeit jedes der Schaltmittel zyklisch überprüft werden. Somit können Einzelfehler zuverlässig erkannt werden, bevor ein Sicherheitsverlust durch ein weiteres defektes Schaltmittel eintreten kann. Die zumindest eine Beleuchtungssteuerungsvorrichtung kann in weiterer Folge zur Anzeige bzw. Signalisierung eines detektierten Fehlers, zum Beispiel eines defekten Schaltmittels ausgebildet sein.

Es kann aber auch zweckmäßig sein, wenn der zumindest einen Beleuchtungssteuerungsvorrichtung ein Signalverbindungszustandsüberprüfungsmittel signaltechnisch zugeordnet ist, welches Signalverbindungszustandsüberprüfungsmittel zur fortlaufenden Überprüfung des Koppelungszustands der Signalverbindung ausgebildet ist, und dass die Beleuchtungssteuerungsvorrichtung im Falle eines gekoppelten Zustands der Signalverbindung zur Aktivierung der Beleuchtungsvorrichtung ausgebildet ist, und im Falle eines gelösten Zustands der Signalverbindung zur Deaktivierung der Beleuchtungsvorrichtung ausgebildet ist.

Hierdurch kann der Koppelungszustand der Signalverbindung zwischen dem Sicherheitsschaltelement des Handbediengerätes und der wenigstens einen Steuerungsvorrichtung von der Beleuchtungssteuerungsvorrichtung fortlaufend mittels des Signalverbindungszustandsüberprüfungsmittels überwacht werden. In weiterer Folge kann somit durch die Beleuchtungssteuerungsvorrichtung auch eine automatische Aktivierung oder eine automatische Deaktivierung der Beleuchtungsvorrichtung in Abhängigkeit von dem detektierten Koppelungszustand der Signalverbindung durchgeführt werden.

Bei einer Weiterbildung kann vorgesehen sein, dass die zumindest eine Beleuchtungssteuerungsvorrichtung baulich in der maschinenseitigen Ankoppelungsgegenstelle angeordnet ist.

Diese Ausgestaltungsform ist besonders zweckmäßig bei einer kabelgebundenen Ausführung der Signalverbindung zwischen dem wenigstens einen Sicherheitsschaltelement des Handbediengerätes und der wenigstens einen Steuerungsvorrichtung. Insbesondere kann hierbei die Signalverbindung als kabelgebundener Sicherheitskreis ausgebildet sein. Durch diese Ausgestaltungsform des Steuerungssystems kann die bauliche Komplexität der Handbediengeräte vorteilhaft minimiert werden. Die bauliche Anordnung der zumindest einen Beleuchtungssteuerungsvorrichtung in der Ankoppelungsgegenstelle stellt außerdem eine besonders sichere Ausgestaltungsform für die Verbringung des Beleuchtungssteuerungsvorrichtung dar. Im Prinzip kann bei dieser Ausgestaltungsform jede Ankoppelungsgegenstelle des Steuerungssystems oder nur ein Teil der vorhandenen Ankoppelungsgegenstellen jeweils eine Beleuchtungssteuerungsvorrichtung aufweisen. Dies begünstigt insbesondere die Schaffung besonders kompakter Handbediengeräte, da sowohl schaltungstechnische Komponenten aus dem mobilen Gerät in die stationäre Ankoppelungsgegenstelle ausgelagert werden können, als auch an Schaltmitteln etwaig auftretende Verlustleistung nicht aus einem kompakten Gehäuse mit relativ geringer Oberfläche abgeführt werden muss.

Es kann aber auch vorgesehen sein, dass die zumindest eine Beleuchtungssteuerungsvorrichtung baulich in dem Handbediengerät angeordnet ist.

Diese Ausgestaltungsvariante ist im Besonderen bei einer Verwendung von draht- bzw. kabellos koppelbaren Signalverbindungen zwischen dem Sicherheitsschaltelement und der wenigstens einen Steuerungsvorrichtung vorteilhaft. Dies auch deshalb, da in solchen Fällen die Energie- bzw. Stromversorgung für die Beleuchtungsvorrichtung, welche durch die Beleuchtungssteuerungsvorrichtung zur Anpassung der visuell wahrnehmbaren Leuchtintensität elektrisch bzw. elektronisch variiert wird, von einer ebenfalls an dem Handbediengerät angeordneten, elektrischen Stromquelle gespeist wird.

Bei einer vorteilhaften Ausführungsform kann vorgesehen sein, dass die zumindest eine Beleuchtungssteuerungsvorrichtung mit wenigstens einem ersten, leuchtintensitätssensitiven Sensormittel datensignaltechnisch verbunden ist, welches erste Sensormittel baulich in einem Nahbereich des Sicherheitsschaltelementes oder innerhalb des Sicherheitsschaltelementes angeordnet ist, und welches Sensormittel zur Erfassung der Umgebungshelligkeit im Nahbereich des Sicherheitsschaltelementes ausgebildet ist.

Hierdurch kann für eine Beleuchtungssteuerungsvorrichtung ein effizientes Erfassungsmittel zur Erfassung der aktuellen Umgebungshelligkeit, spezifisch im Nahbereich des Sicherheitsschaltelementes bereitgestellt werden, und ist nicht nur eine allgemeine Information über die Umgebungshelligkeit an einem Arbeitsplatz bereitgestellt. Durch ein solches Sensormittel sind auch Veränderungen der Umgebungshelligkeit erfassbar, welche sich beispielsweise durch eine Veränderung der Position oder Lage des Handbediengerätes ergeben können, beispielsweise durch Verbringen des Handbediengerätes in durch Maschinenteile bzw. -komponenten abgeschattete Bereiche einer Anlagenkomponente, oder etwa durch ein Abdecken des Sicherheitsschaltelementes und Dergleichen.

In weiterer Folge kann es zweckmäßig sein, dass die zumindest eine Beleuchtungssteuerungsvorrichtung zur automatischen, elektrisch oder elektronisch gesteuerten Anpassung der visuell wahrnehmbaren Leuchtintensität der Beleuchtungsvorrichtung auf Basis der erfassten Umgebungshelligkeit ausgebildet ist, und/oder zur automatischen, dynamischen Vorgabe einer minimalen Grenzintensität für die Beleuchtungsvorrichtung auf Basis der erfassten Umgebungshelligkeit ausgebildet ist.

Damit ist ein Mittel zur automatischen Anpassung bzw. Regelung der visuell wahrnehmbaren Leuchtintensität bei einer Veränderung der Umgebungshelligkeit bereitgestellt. Auf diese Weise kann für ein über die Signalverbindung funktionswirksam verbundenes und beleuchtetes Sicherheitsschaltelement für jede gegebene bzw. detektierte Umgebungshelligkeit jeweils eine möglichst optimale, visuell wahrnehmbare Leuchtintensität eingestellt werden, bzw. zumindest eine minimal erforderliche Grenzintensität automatisiert festgelegt werden. Hierdurch kann gewährleistet werden, dass ein funktionswirksames Sicherheitsschaltelement mit hoher Zuverlässigkeit auch als funktionswirksam erkennbar ist.

In Zusammenhang mit der Erfassung der Umgebungshelligkeit kann es zusätzlich zweckmäßig sein, wenn das Steuerungssystem wenigstens eine einer Anlagenkomponente ortsnah zugeordnete Lichtquelle umfasst, welche Lichtquelle zur Aussendung eines codierten Lichtsignales ausgebildet ist, und dass das erste leuchtintensitätssensitive Sensormittel zur Erfassung und Bereitstellung gegenüber der Beleuchtungssteuerungsvorrichtung des codierten Lichtsignals der Lichtquelle ausgebildet ist.

Hierdurch sind in codierten Lichtsignalen enthaltene Informationen mittels des ersten Sensormittels erfassbar und können gegenüber der Beleuchtungssteuerungsvorrichtung zur weiteren Informationsverarbeitung und/oder Informationsweiterleitung verwendet werden.

Zum Beispiel kann vorgesehen sein, dass die Beleuchtungssteuerungsvorrichtung zur Bereitstellung einer Information über eine Erfassung eines codierten Lichtsignals gegenüber einer Steuerungsvorrichtung und/oder einer Sicherheitssteuerung ausgebildet ist, und dass die jeweilige Steuerungsvorrichtung und/oder Sicherheitssteuerung zur Freigabe wenigstens von beobachtungsrelevanten Steuerungskommandos nur im Falle einer Bereitstellung einer Information über eine Erfassung eines codierten Lichtsignals durch die Beleuchtungssteuerungsvorrichtung ausgebildet ist.

Dadurch kann die Umgebung einer bestimmten Maschine bzw. Anlagenkomponente mit einem Lichtsignal mit einer anlagenspezifischen Codierung ausgeleuchtet werden. In weiterer Folge kann sichergestellt werden, dass bestimmte Bedienkommandos, insbesondere beobachtungsrelevante Steuerungskommandos nur ausführbar sind, solange sich die Bedienperson zumindest in Sichtweite der jeweiligen Anlagenkomponente bzw. Maschine befindet und die Wirkung ihrer Bedienhandlungen visuell erfassen und überwachen kann. Dies kann insbesondere bei drahtlos gekoppelten Handbediengeräten mit potenziell großer Kommunikationsreichweite vorteilhaft für einen sicheren Betrieb einer Anlage sein.

In diesem Zusammenhang kann beispielsweise auch eine Übertragung und Auswertung des codierten Lichtsignales im Zuge des Aufbaus einer Funkverbindung zwischen einem drahtlos gekoppelten Handbediengerät und einer Steuerungsvorrichtung der Anlage bzw. Anlagenkomponente erfolgen. Damit ist zusätzlich eine verwechslungssichere Zuordnung eines Handbediengerätes ermöglicht.

Es kann aber auch zweckmäßig sein, wenn die zumindest eine Beleuchtungssteuerungsvorrichtung mit einem zweiten, leuchtintensitätssensitiven Sensormittel datensignaltechnisch leitungsverbunden ist, welches zweite Sensormittel baulich in einem Nahbereich des Sicherheitsschaltelementes oder innerhalb des Sicherheitsschaltelementes angeordnet ist, und welches zweite Sensormittel zur Erfassung eines Istwerts der Leuchtintensität der Beleuchtungsvorrichtung ausgebildet ist.

Dadurch ist grundsätzlich ein Mittel zur Überwachung des oder der Leuchtmittel(s) der Beleuchtungsvorrichtung bzw. der Steuerungselektronik der Beleuchtungsvorrichtung bereitgestellt. Beispielsweise kann durch dieses zweite Sensormittel überprüft werden, ob die Beleuchtungsvorrichtung grundsätzlich funktioniert. Letztlich kann durch ein solches Sensormittel die Betriebszuverlässigkeit des Steuerungssystems wirksam verbessert werden.

Beispielsweise kann vorgesehen sein, dass die zumindest eine Beleuchtungssteuerungsvorrichtung zum Vergleichen des erfassten Istwerts der Leuchtintensität der Beleuchtungsvorrichtung mit einem intern festgelegten und/oder steuerungstechnisch generierten Sollwert für die Leuchtintensität ausgebildet ist, und dass die Beleuchtungssteuerungsvorrichtung auf Basis des Vergleiches bei Feststellung einer Überschreitung eines festgelegten Grenzwertes für eine zulässige Abweichung des Istwerts vom Sollwert zur Bereitstellung eines Sollwertfehlersignals gegenüber einer Steuerungsvorrichtung und/oder einer Sicherheitssteuerung des Steuerungssystems ausgebildet ist.

Durch diese Ausgestaltungsform kann ein detektierter Fehler bzw. eine fehlerhafte Funktion der Beleuchtungsvorrichtung oder der Steuerungselektronik für die Beleuchtungsvorrichtung unmittelbar angezeigt werden. In der Folge kann zum Beispiel umgehend eine Reparatur- bzw. Instandsetzungsmaßnahme eingeleitet werden, und so die Betriebssicherheit des Steuerungssystems erhalten werden.

Es kann auch vorgesehen sein, dass die zumindest eine Beleuchtungssteuerungsvorrichtung zur Anpassung der visuell wahrnehmbaren Leuchtintensität durch Beaufschlagung der Beleuchtungsvorrichtung mit einem pulsweitenmodulierten Ansteuerungssignal ausgebildet ist, und das zweite Sensormittel zur Erfassung und zur Bereitstellung für die Beleuchtungssteuerungsvorrichtung eines zeitlichen Verlaufes des durch die Beleuchtungsvorrichtung emittierten, pulsweitenmodulierten Lichtes ausgebildet ist, und dass die Beleuchtungssteuerungsvorrichtung zur Überprüfung der ordnungsgemäßen Funktion der Beleuchtungsvorrichtung durch Vergleichen eines während eines Pulszeitintervalls des pulsweitenmodulierten Ansteuerungssignals erfassten Sensorsignals des zweiten Sensormittels mit einem während eines Pausezeitintervalls des pulsweitenmodulierten Ansteuerungssignals erfassten Sensorsignals des zweiten Sensormittels ausgebildet ist, und die Beleuchtungssteuerungsvorrichtung bei einem negativen Überprüfungsergebnis zur Bereitstellung eines Puls-Pause-Fehlersignals gegenüber einer Steuerungsvorrichtung und/oder einer Sicherheitssteuerung des Steuerungssystems ausgebildet ist.

Dadurch ist für die zumindest eine Beleuchtungssteuerungsvorrichtung ein Mittel zur Überprüfung des pulsweitenmodulierten Ansteuerungssignals für die Beleuchtungsvorrichtung bereitgestellt. Im Besonderen ist für die Beleuchtungssteuerungsvorrichtung überprüfbar, ob sich das pulsweitenmodulierte Ansteuerungssignal auch mit ausreichender Amplitude in dem zeitlichen Verlauf des zeitlich aufgelöst detektierten, pulsweitenmodulierten Licht der Beleuchtungsvorrichtung bzw. der Leuchtmittel der Beleuchtungsvorrichtung widerspiegelt. Im Prinzip ist durch die angegebenen Merkmale eine fortdauernde Funktionsprüfung sowohl der Beleuchtungsvorrichtung als auch des zweiten Sensormittels und des oder der Schaltmittel(s) bereitgestellt. Beispielsweise können Schaltfehler in der Ansteuerung der Beleuchtungsvorrichtung, welche sich durch ständiges Leuchten der Beleuchtungsvorrichtung manifestieren können, auf diese Weise detektiert werden. Solche Fehler können zum Beispiel durch defekte, elektronische Schaltmittel hervorgerufen werden.

Des Weiteren kann vorgesehen sein, dass die zumindest eine Beleuchtungssteuerungsvorrichtung zum Vergleichen der von dem ersten Sensormittel und/oder dem zweiten Sensormittel bereitgestellten Sensordaten mit im Steuerungssystem speicherbaren Referenzdaten ausgebildet ist, und dass die Beleuchtungssteuerungsvorrichtung bei einer Überschreitung einer zulässigen Abweichung der Sensordaten von den Referenzdaten zur Bereitstellung eines Abweichungsfehlersignals gegenüber einer Steuerungsvorrichtung und/oder einer Sicherheitssteuerung des Steuerungssystems ausgebildet ist.

Durch diese Merkmale ist für die zumindest eine Beleuchtungssteuerungsvorrichtung ein zusätzliches Mittel zur Detektion bzw. Erkennung von Veränderungen gegenüber einem ordnungsgemäßen Ursprungszustand bereitgestellt. Beispielsweise können auf diese Weise etwa Beschädigungen oder Verschmutzungen und Dergleichen am Sicherheitsschaltelement bzw. der Beleuchtungsvorrichtung erkannt werden. Im Prinzip können so auch Manipulationsversuche, etwa durch ein Abdecken des oder der Sicherheitsschaltelemente(s) des Handbediengerätes erkannt werden. Durch umgehende Signalisierung eines detektierten Fehlers via das Abweichungsfehlersignal, kann die Beleuchtungssteuerungsvorrichtung umgehend eine sicherheitsrelevante Beeinträchtigung der Funktion des Steuerungssystems anzeigen. In weiterer Folge kann die wenigstens eine Steuerungsvorrichtung oder die Sicherheitssteuerung zum Beispiel zu einer Sperre der Eingabe von Steuerungskommandos bzw. zur Nichtumsetzung von an dem betroffenen Handbediengerät eingegebener Steuerungskommandos ausgebildet sein.

Erfassungstechnisch kann zusätzlich auch vorgesehen sein, dass die zumindest eine Beleuchtungssteuerungsvorrichtung ein Strommessmittel zur Bestimmung des von der Beleuchtungsvorrichtung aufgenommenen, elektrischen Stromflusses umfasst, und dass die Beleuchtungssteuerungsvorrichtung zum Vergleich der erfassten Stromflussdaten mit im Steuerungssystem abgespeicherten Referenzdaten ausgebildet ist, und dass die Beleuchtungssteuerungsvorrichtung bei einer Überschreitung einer vorgegebenen Abweichung der bestimmten Stromflussdaten von den Referenzdaten zur Bereitstellung eines Stromflussfehlersignals gegenüber einer Steuerungsvorrichtung und/oder einer Sicherheitssteuerung des Steuerungssystems ausgebildet ist.

Dadurch ist eine für die Beleuchtungssteuerungsvorrichtung eine weitere Ausgestaltungsvariante zur Überwachung der ordnungsgemäßen Funktion der Beleuchtungsvorrichtung bereitgestellt. Durch Erfassung des Stromflusses können im Besonderen Defekte von elektronischen Schaltmitteln und Leitungen sowie defekte Leuchtmittel der Beleuchtungsvorrichtung effizient von der Beleuchtungssteuerungsvorrichtung erkannt werden. Durch die Fehlersignalisierung kann die Beleuchtungssteuerungsvorrichtung einen solchen Fehler wiederum unmittelbar anzeigen.

In weiter Folge kann vorgesehen sein, dass die Steuerungsvorrichtung und/oder die Sicherheitssteuerung bei Bereitstellung eines Fehlersignals durch die Beleuchtungssteuerungsvorrichtung zur umgehenden Überführung der Anlage oder der betroffenen Anlagenkomponente in einen sicheren Zustand ausgebildet ist.

Bei Bereitstellung eines Fehlersignals, also beispielsweise eines Sollwertfehlersignals, Abweichungsfehlersignals, Puls-Pause-Fehlersignals und/oder eines Stromflussfehlersignals, kann auf diese Weise eine Verminderung bzw. ein Verlust der Betriebssicherheit umgehend hintangehalten bzw. verhindert werden. Insbesondere kann durch ein entsprechend ausgestaltetes Steuerungssystem die Anlage bzw. eine betroffenen Anlagenkomponente oder Maschine umgehend in einen sicheren Zustand versetzt werden und gehalten werden, bis beispielsweise ein defektes Sicherheitsschaltelement oder eine defekte Beleuchtungsvorrichtung wieder instandgesetzt wird bzw. wieder funktionsbereit ist, oder zum Beispiel ein voll funktionsfähiges Handbediengerät mit funktionierendem bzw. funktionierenden Sicherheitsschaltelement(en) anstatt des defekten Handbediengerätes angekoppelt wird.

Hierbei kann vorgesehen sein, dass die Steuerungsvorrichtung und/oder die Sicherheitssteuerung zur signaltechnischen Einkopplung eines Fehlersignals in signaläquivalenter Art zu einem manuell betätigten Sicherheitsschaltelement in einen Sicherheitskreis für die Anlage oder die Anlagenkomponente ausgebildet ist.

Dadurch ist ein sicheres und zuverlässiges Mittel zur Überführung einer Anlage oder Anlagenkomponente in einen sicheren Zustand bereitgestellt, wenn von der Beleuchtungssteuerungsvorrichtung ein Fehlersignal bereitgestellt, also ein Fehler gemeldet wird.

Es kann aber auch vorgesehen sein, dass die Steuerungsvorrichtung und/oder die Sicherheitssteuerung bei Bereitstellung eines Fehlersignals durch die Beleuchtungssteuerungsvorrichtung zur Sperre von sicherheitsrelevanten Steuerungskommandos und/oder zur Anzeige des Fehlersignals oder der Fehlersignale ausgebildet ist.

Durch die spezifische Anzeige bestimmter, von der Beleuchtungssteuerungsvorrichtung bereitgestellter Fehlersignale, können Instandsetzungs- bzw. Reparaturmaßnahmen gezielt in Angriff genommen werden, da eine zusätzliche Information über die Art des aufgetretenen Fehlers zur Verfügung gestellt ist. Die Art der aufgetretenen Fehlersignale kann zu Informationszwecken bzw. zur Nachverfolgung in der Art eines Fehlerprotokolls auch gespeichert bzw. protokolliert werden. Die Sperre von Steuerungskommandos ist eine wirksame sicherheitstechnische Maßnahme, um bei einem Defekt eines Sicherheitsschaltelements bzw. Beleuchtungsvorrichtung für ein Sicherheitsschaltelement das Auslösen von Steuerungskommandos via das betroffene Handbediengerät zu verhindern, sodass hierzu ein voll funktionsfähiges Handbediengerät benutzt werden muss.

Bei einer vorteilhaften Weiterbildung kann vorgesehen sein, dass die zumindest eine Beleuchtungssteuerungsvorrichtung zum Vergleichen des erfassten Istwerts der Leuchtintensität der Beleuchtungsvorrichtung mit einem intern festgelegten und/oder einem steuerungstechnisch generierten Sollwert für die Leuchtintensität ausgebildet ist, und dass die Beleuchtungssteuerungsvorrichtung auf Basis des Vergleiches zur elektrischen und/oder elektronischen Nachregelung der visuell wahrnehmbaren Leuchtintensität der Beleuchtungsvorrichtung ausgebildet ist.

Durch diese Ausgestaltungsvariante können Veränderungen der durch die Beleuchtungsvorrichtung erzeugten Leuchtintensität erfasst und korrigiert werden. Im Besonderen können Langzeitabweichungen, beispielsweise eine alterungsbedingte Verringerung der Leuchtintensität des oder der Leuchtmittel(s) der Beleuchtungsvorrichtung erfasst, und durch die Beleuchtungssteuerungsvorrichtung regelungstechnisch entsprechend korrigiert werden.

Grundsätzlich kann bei Verwendung eines ersten und zweiten Sensormittels eine fortlaufenden Funktionsprüfung der beiden Sensormittel durchgeführt werden. Bei gemeinsamer Verwendung eines ersten und eines zweiten Sensormittels kann außerdem eine gegenseitige bzw. wechselseitige Beeinflussung zwischen der Erfassung der Beleuchtung des Sicherheitsschaltelementes und insbesondere der Erfassung einer codierten Arbeitsbereichsausleuchtung einfach rechnerisch kompensiert werden. Dies auch bei Anpassung der visuell wahrnehmbaren Leuchtintensität durch Beaufschlagung der Beleuchtungssteuerungsvorrichtung mit einem pulsweitenmodulierten Ansteuerungssignal.

Bei einer weiteren Ausführungsform kann vorgesehen sein, dass das erste Sensormittel und das zweite Sensormittel ein gemeinsames Intensitätserfassungselement aufweisen, und die zumindest eine Beleuchtungssteuerungsvorrichtung zur periodischen Abfrage des Intensitätserfassungselements während Pulszeitintervallen und Pausezeitintervallen eines pulsweitenmodulierten Ansteuerungssignals für die Beleuchtungsvorrichtung ausgebildet ist.

Im Falle der Ausbildung der Beleuchtungssteuerungsvorrichtung zur Verwendung eines pulsweitenmodulierten Ansteuerungssignals für die Anpassung der Leuchtintensität der Beleuchtungsvorrichtung, kann durch dieses technische Merkmal sowohl die Leuchtintensität der Beleuchtungsvorrichtung als auch die Umgebungshelligkeit mittels eines einzigen Intensitätserfassungselements im Prinzip erfasst werden. Die Informationen über Leuchtintensität und Umgebungshelligkeit sind dabei im zeitlichen Verlauf der mittels des Intensitätserfassungselementes detektierten Puls- und Pausephasen des von der Beleuchtungsvorrichtung emittierten Lichtes abgebildet. Des Weiteren stellt diese Ausgestaltungsvariante eine baulich einfache und platzsparende Umsetzung für die Erfassung sowohl der Leuchtintensität als auch der Umgebungshelligkeit dar.

Hierbei kann es von Vorteil sein, wenn die zumindest eine Beleuchtungssteuerungsvorrichtung zur Bestimmung der Umgebungshelligkeit aus den während Pausezeitintevallen abgefragten Sensordaten ausgebildet ist.

Die präzise Erfassung der Umgebungshelligkeit ist durch dieses Merkmal der Beleuchtungssteuerungsvorrichtung unabhängig davon möglich, ob die Beleuchtungsvorrichtung aktiviert oder deaktiviert ist, also als beleuchtet wahrgenommen werden kann oder nicht. Damit sind Störungen bei der Messung der Umgebungshelligkeit durch eine grundsätzlich aktivierte Beleuchtungsvorrichtung hintangehalten. In weiterer Folge können auch Störungen bei der umgebungshelligkeitsabhängigen, elektronischen Anpassung der visuell wahrnehmbaren Leuchtintensität hintangehalten werden, da die Umgebungshelligkeit von der Beleuchtungssteuerungsvorrichtung nur in den Pausephasen bzw. Pausezeitintevallen des pulsweitenmodulierten Ansteuerungssignals bestimmt bzw. erfasst wird. Außerdem können besondere Maßnahmen zur Aufhebung eines Störeinflusses einer aktivierten Beleuchtungsvorrichtung bei der Bestimmung der Umgebungshelligkeit, wie etwa Abschattungsmaßnahmen für zur Erfassung der Umgebungshelligkeit ausgebildeter Sensormittel bzw. Sensorvorrichtungen, erübrigt werden. Grundsätzlich kann eine Ausgestaltungsvariante zweckmäßig sein, bei welcher das erste und/oder das zweite Sensormittel und/oder das gemeinsame Intensitätserfassungselement baulich innerhalb des Mantels des Sicherheitsschaltelements angeordnet ist bzw. sind.

Hierdurch kann im Besonderen die bauliche Ausgestaltung des Handbediengerätes effizienter ausgeführt werden, da beispielsweise für ein Sensormittel bzw. für das Intensitätserfassungselement keine separate Aussparung im Gehäuse des Handbediengerätes vorgesehen werden muss. Im Falle der Erfassung der Umgebungshelligkeit mittels einem innerhalb des Sicherheitsschaltelementes angeordneten Sensormittels bzw. Intensitätserfassungselementes, kann der Mantel des Sicherheitsschaltelementes im Prinzip die Funktion einer Streuscheibe aufweisen, sodass das aus allen Richtungen auf den Mantel auffallende Umgebungslicht gleichermaßen durch das Sensormittel erfasst wird, und das Sensormittel bzw. das Intensitätserfassungselement nicht nur ein aus einer Vorzugsrichtung einfallendes Licht erfasst.

Des Weiteren kann vorgesehen sein, dass die zumindest eine Beleuchtungssteuerungsvorrichtung im Falle eines betätigten Sicherheitsschaltelements zur elektrisch oder elektronisch gesteuerten Anpassung der Beleuchtungsvorrichtung durch ein Anzeigesignal, insbesondere durch ein visuell wahrnehmbares Blinksignal ausgebildet ist.

Dadurch ist auch bei ausgedehnten bzw. weitläufigen Anlagen mit vielen verteilt angeordneten Sicherheitsschaltelementen ein betätigtes Sicherheitsschaltelement als solches gut erkennbar. Diese Ausgestaltungsvariante ermöglicht ein rasches und verwechslungssicheres Auffinden eines betätigten Sicherheitsschaltelements, sodass die Anlage oder die entsprechende Anlagenkomponente nach entsprechender Beilegung einer Gefahrensituation oder Behebung eines Fehlers umgehend wieder in Betrieb genommen werden kann. Ein Blinksignal kann hierbei auch dergestalt abgegeben werden, dass die Leuchtintensität periodisch zwischen einer höheren und einer niedrigeren Intensität wechselt, dabei das Sicherheitsschaltelement aber durchgehend beleuchtet ist, und unzweifelhaft als funktionswirksames Sicherheitsschaltelement erkennbar ist.

Schließlich kann auch eine Ausgestaltungsform von Vorteil sein, bei welcher die Beleuchtungsvorrichtung mehrere, verschiedenfarbige Leuchtmittel aufweist, und dass die zumindest eine Beleuchtungssteuerungsvorrichtung zur separaten, elektrisch und/oder elektronisch gesteuerten Anpassung der einzelnen Leuchtmittel ausgebildet ist.

Dadurch sind grundsätzlich mehrere Möglichkeiten zur Kennzeichnung eines Sicherheitsschaltelements bereitgestellt. Insbesondere lassen sich hierdurch unterschiedliche, länderspezifische Regelungen bzw. Normen zur farblichen Kennzeichnung von Sicherheitsschaltelementen berücksichtigen.

Zum besseren Verständnis der Erfindung wird diese anhand der nachfolgenden Figuren näher erläutert.

Es zeigen jeweils in stark vereinfachter, schematischer Darstellung:
- Fig. 1: ausschnittsweise ein Ausführungsbeispiel eines Steuerungssystems sowie einer mit dem Steuerungssystem elektrisch gesteuerten Anlage mit Anlagenkomponenten;
- Fig. 2: ausschnittsweise ein Ausführungsbeispiel für ein Sicherheitsschaltelement mit einer Beleuchtungsvorrichtung;
- Fig. 3: ausschnittsweise ein Ausführungsbeispiel für eine Ausgestaltungsvariante des Steuerungssystems mit einer Beleuchtungssteuerungsvorrichtung;
- Fig. 4: ausschnittsweise ein Ausführungsbeispiel für eine weitere Ausgestaltungsvariante des Steuerungssystems mit einer Beleuchtungssteuerungsvorrichtung;
- Fig. 5: ausschnittsweise ein Ausführungsbeispiel für eine mögliche Ausgestaltungsform einer Sensormittelanordnung für die Beleuchtungssteuerungsvorrichtung;
- Fig. 6: ausschnittsweise ein Ausführungsbeispiel für mögliche Ausgestaltungsformen einer Beleuchtungsvorrichtung, Sensormittel und Beleuchtungssteuerungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

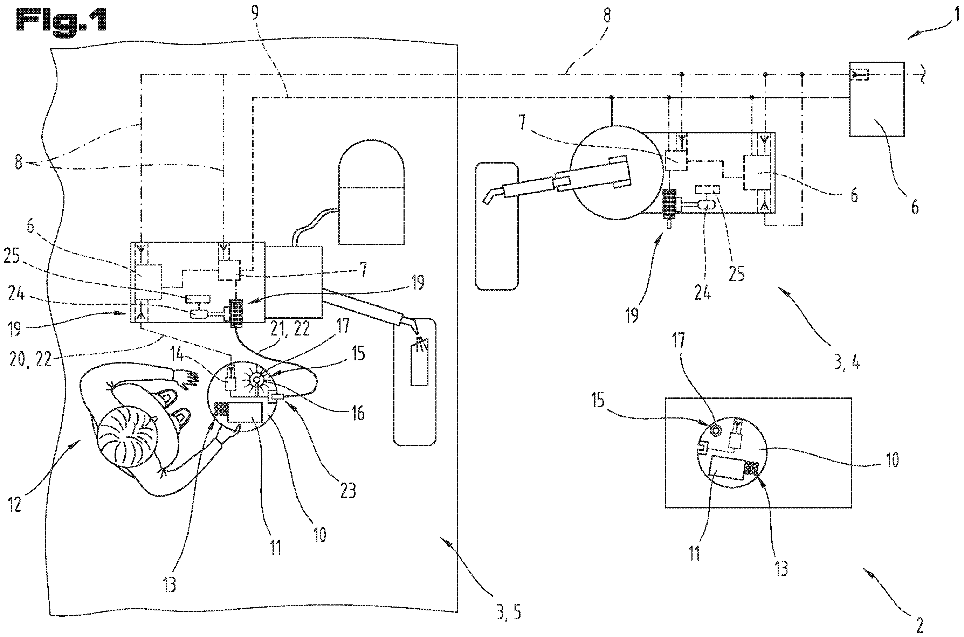

In der Fig. 1 ist ein Steuerungssystem 1 sowie ausschnittsweise eine mit dem Steuerungssystem 1 elektrisch gesteuerte Anlage 2 schematisch veranschaulicht. Die dargestellte Anlage 2 umfasst mehrere Anlagenkomponenten 3, welche unterschiedlich ausgebildet sein können, bzw. unterschiedlichen Arbeitszwecken dienen können. Hierbei können solche unterschiedlichen Anlagenkomponenten 3 steuerungstechnisch unterschiedlich ausgestaltet sein. Des Weiteren kann eine Anlage 2 Anlagenkomponenten 3 bzw. Arbeitsplätze aufweisen, welche unter anderem in Abhängigkeit von den jeweils gegebenen Erfordernissen unterschiedlich ausgeleuchtet sind bzw. unterschiedliche Umgebungshelligkeiten aufweisen. Als Beispiele für solche unterschiedlichen Anlagenkomponenten 3 sind in der Fig. 1 eine Roboterbearbeitungsstation 4 sowie ausschnittsweise eine automatisch gesteuerte Lackierkammer 5 dargestellt.

Im Besonderen ist die Roboterbearbeitungsstation 4 in der Fig. 1 als ein Beispiel für einen gut ausgeleuchteten Arbeitsplatz bzw. eine Anlagenkomponente 3 mit verhältnismäßig hoher Umgebungshelligkeit dargestellt. Die gegenüber der restlichen Anlage 2 räumlich abgetrennte bzw. abgeschottete Lackierkammer 5 ist dahingegen als Beispiel für eine Anlagenkomponente 3 mit verhältnismäßig geringer Umgebungshelligkeit veranschaulicht. Letzteres beispielsweise deshalb, da in derartigen Lackierkammern 5 oftmals lichtempfindliche Substanzen bzw. Lacke verarbeitet werden. Selbstverständlich kann eine technische Anlage 2 beliebige, weitere Anlagenkomponenten bzw. Maschinen umfassen, welche weiteren Anlagenkomponenten wiederum jeweils unterschiedliche Umgebungshelligkeiten aufweisen können.

Wie in der Fig. 1 dargestellt ist, weist das Steuerungssystem 1 wenigstens eine Steuerungsvorrichtung 6 auf. Das in der Fig. 1 beispielhaft und ausschnittsweise dargestellte Steuerungssystem 1 umfasst mehrere Steuerungsvorrichtungen 6, wobei die Steuerungsvorrichtungen 6 zur elektronischen Abarbeitung bzw. Ausführung unterschiedlicher Aufgaben ausgebildet sein können. Einige der dargestellten Steuerungsvorrichtungen 6 können beispielsweise durch primär funktionale Steuerungsvorrichtungen 6 zur Ansteuerung von Aktuatoren, Materialzufuhrvorrichtungen etc. der Maschinen bzw. Anlagenkomponenten 3 der Anlage 2 ausgebildet sein. Andere Steuerungsvorrichtungen 6 können wiederum übergeordnete Steuerungsvorrichtungen zur Abwicklung anlagenübergreifender Abläufe ausgebildet sein. Außerdem können speziell ausgestaltete Sicherheitssteuerungen 7 vorhanden sein, welche speziell zur elektronischen Ausführung bzw. Umsetzung sicherheitstechnischer Abläufe und Prozesse der Anlage 2 ausgebildet sein können.

Wie dies heutzutage üblich ist können die die einzelnen Steuerungsvorrichtungen 6 bzw. Sicherheitssteuerungen 7 über drahtlose Kommunikationsverbindungen 8 und/oder über kabelgebundene Kommunikationsverbindung 9 signal- bzw. datentechnisch netzwerktechnisch miteinander in Verbindung stehen. Dabei ist die spezifische Ausgestaltungsform eines derartigen Steuerungsnetzwerkes bzw. dessen Netzwerkarchitektur im Grunde genommen frei wählbar, bzw. kann an die jeweiligen Gegebenheiten und Anforderungen frei angepasst werden.

Das Steuerungssystem 1 umfasst des Weiteren zumindest ein tragbares, mobiles Handbediengerät 10. Derartige Handbediengeräte 10 weisen üblicherweise Ausgabemittel 11 zur Anzeige von Informationen, Anlagendarstellungen oder Parameterinformationen etc. für eine Bedienperson 12, und Eingabemittel 13 zum Beispiel zur Eingabe bzw. zum Auslösen von Steuerungskommandos durch die Bedienperson 12 auf. In der Regel umfassen entsprechende Handbediengeräte 10 natürlich auch wenigstens eine elektronische Steuerung 14.

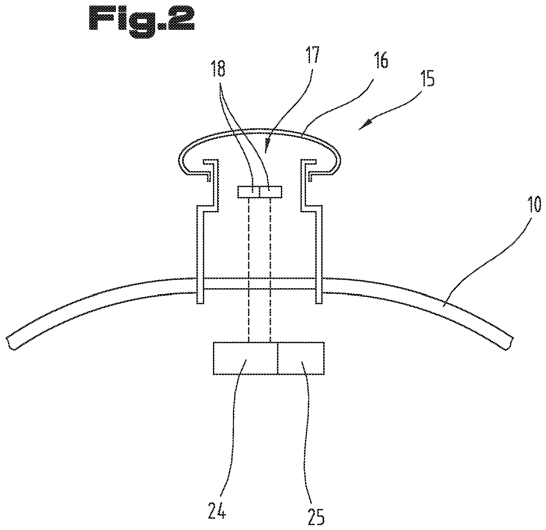

Das zumindest eine Handbediengerät 10 des Steuerungssystems 1 weist wenigstens ein manuell zu betätigendes Sicherheitsschaltelement 15 auf, wobei die in der Fig. 1 dargestellten Sicherheitsschaltelemente 15 einen lichtdurchlässigen Mantel 16 bzw. Ummantelung aufweisen, wie dies insbesondere in der Fig. 2 schematisch veranschaulicht ist.

Derartige Sicherheitsschaltelemente 15 können insbesondere durch sogenannte Not-Aus- bzw. Not-Halt-Schalter gebildet sein, welche Not-Aus-Schalter üblicherweise mit einem pilzförmigen Mantel 16 ausgestaltet sind, insbesondere um ein möglichst sicheres und rasches Betätigen durch einen Menschen zu ermöglichen.

Wie in der Fig. 2 ersichtlich ist, und auch in der Fig. 1 vereinfacht veranschaulicht ist, ist dem Sicherheitsschaltelement 15 eine Beleuchtungsvorrichtung 17 zugeordnet, welche Beleuchtungsvorrichtung 17 wenigstens ein Leuchtmittel 18 aufweist. Gemäß dem in der Fig. 1 und Fig. 2 dargestellten Ausführungsbeispiel ist die Beleuchtungsvorrichtung 17 vorzugsweise im Inneren des Sicherheitsschaltelements 15 bzw. innerhalb des Mantels 16 des Sicherheitsschaltelements 15 angeordnet. Wie in der Fig. 2 veranschaulicht ist kann die Beleuchtungsvorrichtung 17 auch mehrere Leuchtmittel 18 umfassen, wobei die Leuchtmittel 18 prinzipiell durch jedwede Art von Leuchte bzw. Lampe gebildet sein können. Bevorzugt werden Leuchtdioden bzw. LEDs als Leuchtmittel 18 verwendet.

Bei einer eingeschalteten bzw. aktivierten Beleuchtungsvorrichtung 17 durchdringt das Licht der Beleuchtungsvorrichtung 17 bzw. der Leuchtmittel 18 den semitransparenten Mantel 16 bzw. die Ummantelung des Sicherheitsschaltelementes 15, und kann von einer Person somit mit einer visuell empfundenen bzw. wahrnehmbaren Leuchtintensität wahrgenommen werden. Hierbei wird die empfundenen bzw. wahrgenommene Leuchtintensität durch die an sich bekannten Sensitivitäten bzw. Lichtempfindlichkeiten des menschlichen Auges mitbestimmt.

Die in der Fig. 1 und der Fig. 2 dargestellte Ausführungsform stellt hierbei lediglich ein Beispiel für die Ausgestaltung eines Sicherheitsschaltelementes 15 mit innerhalb eines lichtdurchlässigen Mantels 16 angeordneter Beleuchtungsvorrichtung 17 dar. Alternativ zu der in der Fig. 1 und 2 dargestellten Ausgestaltungsform, kann ein Mantel eines beleuchteten Sicherheitsschaltelementes auch mit Öffnungen für den Durchtritt von Licht, oder mit Öffnungen für den Durchtritt von Leuchtmitteln bzw. lichtführenden oder lichterzeugenden Elementen ausgebildet bzw. versehen sein. Des Weiteren ist grundsätzlich denkbar, dass der Mantel selbst Leuchtmittel aufweist bzw. der Mantel selbst die Beleuchtungsvorrichtung darstellt, oder dass der Mantel eine unmittelbar lichterzeugende Beschichtung aufweist. Als weiteres Beispiel ist auch eine Ausgestaltungsform möglich, bei welcher ein Sicherheitsschaltelement bzw. ein Not-Aus Schalter von rundum außerhalb eines Mantels des Sicherheitsschaltelementes angeordneten Leuchtmitteln angestrahlt wird.

Wie in der Fig. 1 veranschaulicht ist, sind die tragbaren, mobilen Handbediengeräte 10 zum bedarfsweisen signal- bzw. datentechnischen Verbinden mit einer Steuerungsvorrichtung 6 des Steuerungssystems 1 vorgesehen, um beispielsweise spezifische Anlagenkomponenten 3, 4, 5 bedarfsweise manuell bedienen zu können. Bei einer bevorzugten Ausführungsform können hierzu maschinenseitig Ankoppelungsgegenstellen 19 vorgesehen sein, welche jeweils einer elektrisch steuerbaren Anlagenkomponente 3, 4, 5 ortsnah zugeordnet sein können.

Im gezeigten Ausführungsbeispiel ist das linkerhand in der Fig. 1 dargestellte Handbediengerät 10 mit der der Lackierkammer 5 zugeordneten Steuerungsvorrichtung 6 über eine funktechnische Ankoppelungsgegenstelle 19 drahtlos, beispielsweise über eine Funkverbindung 20 verbunden, bzw. mit der Sicherheitssteuerung 7 via eine Ankoppelungsgegenstelle 19 über ein Kabel 21 verbunden. Hierbei kann beispielsweise die Funkverbindung 20 primär zur Bereitstellung von Informationen an dem Handbediengerät 10 vorgesehen sein, und können über das Kabel 21 beispielsweise primär Steuerungskommandos vom Handbediengerät 10 für die Steuerungsvorrichtung 6 bereitgestellt werden. Das Kabel 21 kann zum Beispiel durch ein an sich bekanntes Datenübertragungskabel gebildet sein, welches mehrere Signalleitungen bzw. Datenübertragungsleitungen umfassen kann, aber natürlich auch andere Komponenten, wie zum Beispiel Abschirmungen aufweisen kann.

An dieser Stelle sei erwähnt, dass selbstverständlich auch andere Ausführungsvarianten zur signal- bzw. datentechnischen Anbindung eines Handbediengerätes denkbar sind, beispielsweise rein drahtlose signal- bzw. datentechnische Kommunikationsverbindungen zwischen einem Handbediengerät 10 und einer Steuerungsvorrichtung 6 bzw. Sicherheitssteuerung 7. Das in der Fig. 1 rechterhand dargestellte Handbediengerät 10 ist im gezeigten Beispiel nicht mit der Steuerungsvorrichtung 6 bzw. der Sicherheitssteuerung 7 der Roboterbearbeitungsstation 4 signal- bzw. datentechnisch kommunikationsverbunden.

Das Steuerungssystem 1 umfasst zumindest eine bedarfsweise koppelbare und lösbare Signalverbindung 22 zwischen dem Sicherheitsschaltelement 15 des Handbediengeräts 10 und der wenigstens einen Steuerungsvorrichtung 6 oder einer separat ausgebildeten Sicherheitssteuerung 7. Die in der Fig. 1 dargestellten Ankoppelungsgegenstellen 19 können hierbei zumindest für die signaltechnische Einbindung bzw. Einkoppelung des wenigstens einen Sicherheitsschaltelementes 15 des Handbediengerätes 10 vorgesehen sein. Auf diese Weise kann die wenigstens eine Ankoppelungsgegenstelle 19 zumindest zur Herstellung und zum Lösen einer bedarfsweise koppelbaren und lösbaren Signalverbindung 22 zwischen dem oder den Sicherheitsschaltelement(en) 15 eines Handbediengerätes 10 und einer Steuerungsvorrichtung 6 bzw. Sicherheitssteuerung 7 vorgesehen sein.

Im Falle des im Ausführungsbeispiel gemäß der Fig. 1 rechterhand dargestellten Handbediengerätes 10 ist die Signalverbindung zwischen dem Sicherheitsschaltelement 15 und der Sicherheitssteuerung 7 bzw. der Steuerungsvorrichtung 6 der Roboterbearbeitungsstation 4 gelöst, bzw. keine Signalverbindung für das wenigstens eine Sicherheitsschaltelement 15 dieses Handbediengeräts 10 hergestellt. Das in der Fig. 1 linkerhand dargestellte Sicherheitsschaltelement 15 des entsprechenden Handbediengeräts 10 ist zumindest kabelgebunden bzw. via das Kabel 21 über die dargestellte Signalverbindung 22 mit der Sicherheitssteuerung 7 signaltechnisch wirkverbunden.

Bevorzugt wird eine Signalverbindung 22 zwischen einem Sicherheitsschaltelement 15 eines Handbediengerätes 10 und einer Steuerungsvorrichtung 6 oder Sicherheitssteuerung 7 kabelgebunden geführt, wie dies auch in der Fig. 1 veranschaulicht ist. Das Herstellen der Signalverbindung 22 kann dann durch ein einfaches Anstecken des Kabels 21 über geeignete Steckverbindungen an dem Handbediengerät 10 und/oder der Ankoppelungsgegenstelle 19 erfolgen. Beispielsweise kann vorgesehen sein, dass das Kabel 21 verbringbar bzw. aufrollbar an der Ankoppelungsgegenstell 19 angeordnet ist, und zur Herstellung der Signalverbindung 22 zwischen dem Sicherheitsschaltelement 15 und der Sicherheitssteuerung 7 via eine Steckverbindung 23 mit dem Handbediengerät 10 verbindbar ist. In solchen Fällen kann eine kabelgebundene Signalverbindung 22 auch als Sicherheitskreis ausgeführt bzw. über das Kabel 21 geführt sein. Für die Ausführung solcher Sicherheitskreise wird an dieser Stelle auf die diesbezügliche Fachliteratur, insbesondere auf einschlägige technische Normen und Ausführungsvorschriften verwiesen.

Grundsätzlich kann eine Signalverbindung 22 zwischen einem Sicherheitsschaltelement 15 und einer Steuerungsvorrichtung 6 bzw. Sicherheitssteuerung 7 signaltechnisch aber auch drahtlos etabliert bzw. hergestellt werden, wie dies ebenfalls in der Fig. 1 veranschaulicht ist. In solchen Fällen kann beispielsweise eine entsprechende funktechnische Signalverbindung 22 über Anmeldeprotokolle, welche gegebenenfalls die Eingabe von Identifikationsdaten bzw. Passwörtern erfordern können, erfolgen.

Unabhängig von der exakten Ausführung einer Signalverbindung 22 zwischen einem Sicherheitsschaltelementes 15 eines Handbediengerätes 10 und einer Steuerungsvorrichtung 6 und/oder einer Sicherheitssteuerung 7, ist das Steuerungssystem 1 bei Vorliegen einer gekoppelten Signalverbindung 22 und bei manueller Betätigung des Sicherheitsschaltelements 15 zur Überführung der Anlage 2 oder einer oder mehrerer Anlagenkomponenten 3 in einen sicheren Zustand ausgebildet.

Des Weiteren ist das Steuerungssystem 1 bei Vorliegen einer gekoppelten Signalverbindung 22 zur Aktivierung der Beleuchtungsvorrichtung 17 ausgebildet, und ist bei Vorliegen einer gelösten bzw. abgekoppelten Signalverbindung 22 zur Deaktivierung der Beleuchtungsvorrichtung 17 ausgebildet. Hierzu kann zum Beispiel ein ein- und ausschaltbares bzw. zu- und wegschaltbares, elektrisches Stromversorgungsmittel 24 vorgesehen sein. Je nach Ausgestaltungsform, insbesondere in Abhängigkeit von der Ausführungsform der Signalverbindung 22, also ob drahtlos oder kabelgebunden kann ein Ein- und ein Ausschaltvorgang für die Beleuchtungsvorrichtung im Prinzip auf vielfältige Art und Weise vorgenommen werden. Im Falle einer kabelgebundenen Ausführungsform der Signalverbindung 22 zwischen dem Sicherheitsschaltelement 15 und einer Steuerungsvorrichtung 6 bzw. einer Sicherheitssteuerung 7 kann ein Einschalten respektive Ausschalten der Beleuchtungsvorrichtung 17 in einfacher Weise durch Schaltelemente, welche im Zuge eines An- respektive Absteckvorgangs für das Kabel 21 mechanisch schalten, bewerkstelligt werden. Selbstverständlich sind aber auch elektronisch gesteuerte Lösungen hierfür geeignet.

Wesentlich ist, dass das Steuerungssystem 1 zumindest eine Beleuchtungssteuerungsvorrichtung 25 umfasst, welche bei Vorliegen einer gekoppelten Signalverbindung 22 zwischen dem Sicherheitsschaltelement 15 des Handbediengeräts 10 und der wenigstens einen Steuerungsvorrichtung 6, oder einer separat ausgebildeten Sicherheitssteuerung 7 zur elektrisch und/oder elektronisch gesteuerten Anpassung einer visuell wahrnehmbaren bzw. visuell empfundenen Leuchtintensität der Beleuchtungsvorrichtung 17 ausgebildet ist. Bevorzugt ist die Beleuchtungssteuerungsvorrichtung 25 hierbei auch zum grundsätzlichen Ein- und Ausschalten der Beleuchtungsvorrichtung 17 ausgebildet, beispielsweise durch Ein- und Ausschalten oder Zu- und Wegschalten des elektrischen Stromversorgungsmittels 24, wie dies in dem Ausführungsbeispiel gemäß der Fig. 1 veranschaulicht ist.

Die Beleuchtungssteuerungsvorrichtung 25 ist zur Anpassung bzw. Vorgabe oder Regelung der visuell wahrnehmbaren bzw. empfundenen Leuchtintensität der Beleuchtungsvorrichtung 17 ausgebildet. Hierbei kann zum Beispiel vorgesehen sein, dass die Beleuchtungssteuerungsvorrichtung 25 zur Variation des Versorgungsstroms via das elektrische Stromversorgungsmittel 24 für die Beleuchtungsvorrichtung 17 zur Anpassung der Leuchtintensität ausgebildet ist. Es sind jedoch auch alternative Ausbildungsvarianten möglich, welche noch im Detail erläutert werden.

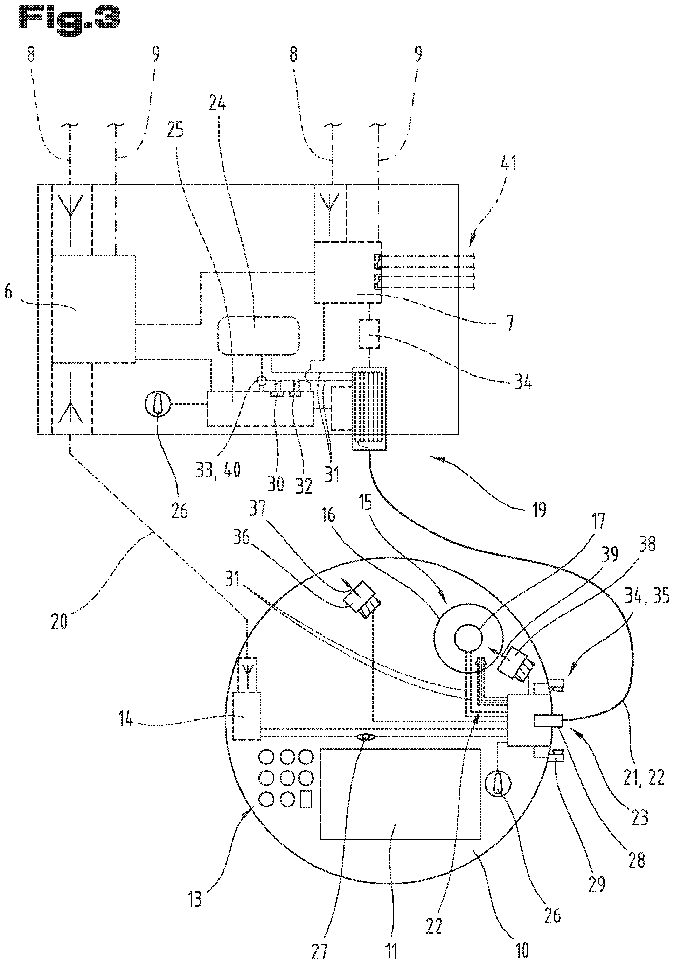

Wie in der Fig. 1 veranschaulicht ist, kann vorgesehen sein, dass die Beleuchtungssteuerungsvorrichtung 25 baulich in einer maschinenseitigen Ankoppelungsgegenstelle 19 angeordnet ist. Eine solche Anordnung bzw. Ausgestaltungsform des Steuerungssystems 1 kann insbesondere zweckmäßig bei kabelgebundenen Signalverbindungen 22 zwischen dem Sicherheitsschaltelement 15 des Handbediengeräts 10 und einer Steuerungsvorrichtung 6 bzw. Sicherheitssteuerung 7 des Steuerungssystems 1 von Vorteil sein. Eine solche Ausgestaltungsvariante ist auch in der Fig. 3 dargestellt, wobei in der Fig. 3 zur besseren Übersichtlichkeit ein Handbediengerät, sowie weitere Komponenten des Steuerungssystems 1 ausschnittsweise und im Vergleich zu der Fig. 1 vergrößert dargestellt sind. Es werden in der Fig. 3 für gleiche Teile gleiche Bezugszeichen bzw. Bauteilbezeichnungen verwendet wie in den Fig. 1 und Fig. 2 verwendet. Um unnötige Wiederholungen zu vermeiden, wird auf die detaillierte Beschreibung zu den Fig. 1 und Fig. 2 hingewiesen bzw. Bezug genommen.

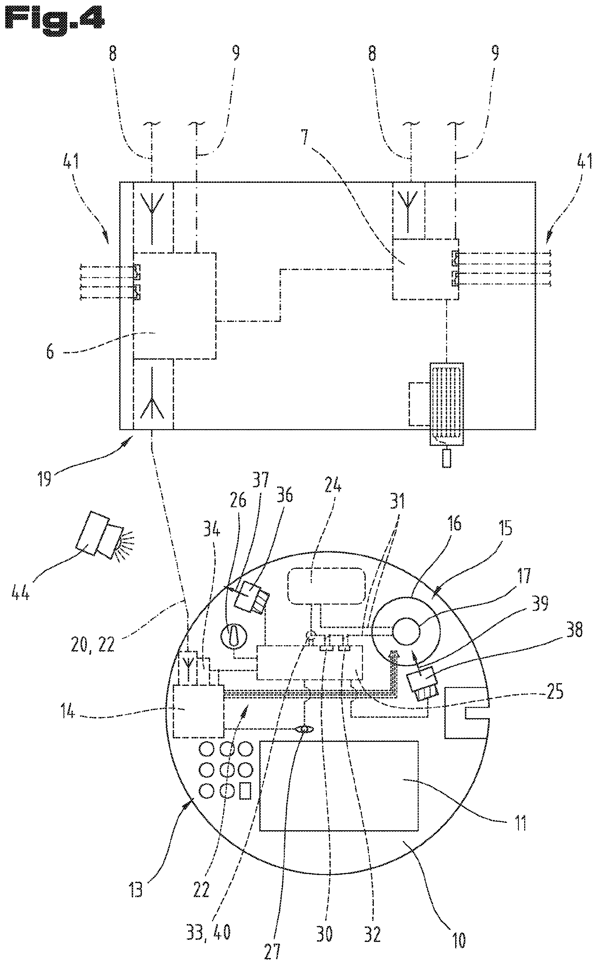

Alternativ zu der in der Fig. 1 bzw. Fig. 3 dargestellten Ausgestaltungsform des Steuerungssystems 1 ist es aber auch möglich, dass die zumindest eine Beleuchtungssteuerungsvorrichtung 25 baulich in dem Handbediengerät 10 angeordnet ist. Ein solches Ausführungsbeispiel ist in der Fig. 4 veranschaulicht, wobei auch in der Fig. 4 wiederum für gleiche Teile gleiche Bezugszeichen bzw. Bauteilbezeichnungen verwendet wie in den Fig. 1 bis Fig. 3 verwendet werden. Die in der Fig. 4 dargestellte Ausführungsform kann im Besonderen zweckdienlich bei einer rein drahtlosen Signalverbindung 22 zwischen dem Sicherheitsschaltelement 15 und einer Steuerungsvorrichtung 6 oder Sicherheitssteuerung 7 des Steuerungssystems 1 sein. Im Falle einer rein drahtlosen, also beispielsweise funktechnischen Signalverbindung 22 kann ein Stromversorgungsmittel 24 zur elektrischen Stromversorgung der Beleuchtungsvorrichtung 17 natürlich an bzw. in dem Handbediengerät 10 angeordnet bzw. integriert sein. Grundsätzlich stellen die in der Fig. 3 und der Fig. 4 veranschaulichten Ausführungsbeispiele alternative Lösungen, insbesondere zur Ausgestaltung der Signalverbindung 22 dar. Es sei an dieser Stelle jedoch angemerkt, dass die in der Fig. 3 gezeigte Ausführungsform grundsätzlich auch mit der in der Fig. 4 gezeigten Ausführungsform kombinierbar ist. Prinzipiell kann das Steuerungssystem also auch jeweils sowohl eine Beleuchtungssteuerungsvorrichtung 25 in einer Ankoppelungsgegenstelle 19, als auch eine Beleuchtungssteuerungsvorrichtung 25 in einem Handbediengerät 10 umfassen, wobei in solchen Fällen das Steuerungssystem 1 zur Auswahl einer der Beleuchtungssteuerungsvorrichtungen 25 für die elektrische bzw. elektronische Anpassung der visuell wahrnehmbaren Leuchtintensität der Beleuchtungsvorrichtung 17 ausgebildet sein kann. Alternativ könnte auch vorgesehen sein, dass eine entsprechende Auswahl durch eine Bedienperson vorgenommen wird.

Unabhängig von der Ausgestaltung bzw. signaltechnischen Führung der Signalverbindung 22 kann der zumindest einen Beleuchtungssteuerungsvorrichtung 25 wenigstens ein manuell verstellbares Eingabestellmittel 26 funktionswirksam zugeordnet sein. Hierbei kann die Beleuchtungssteuerungsvorrichtung 25 bei Vorliegen einer gekoppelten Signalverbindung 22 und bei Verstellung des Eingabestellmittels 26 durch eine Bedienperson 12 zur elektrisch und/oder elektronisch gesteuerten Anpassung der visuell wahrnehmbaren Leuchtintensität der Beleuchtungsvorrichtung 17 auf Basis einer jeweiligen Stellung des Eingabestellmittels 26 ausgebildet ist.

Ein manuell verstellbares Eingabestellmittel 26 kann beispielsweise durch einen mit der Beleuchtungssteuerungsvorrichtung 25 funktionswirksam verbundenen Dreh- oder Schieberegler ausgebildet sein. Selbstverständlich sind auch Eingabestellmittel 26 in der Art von Plus- und Minus-Tastern oder andere Ausgestaltungsvarianten denkbar. Grundsätzlich kann ein derartiges Eingabestellmittel 26 an dem Handbediengerät 10 selbst angeordnet sein, wobei im Falle einer in dem Handbediengerät angeordneten Beleuchtungssteuerungsvorrichtung 25, das Eingabestellmittel 26 direkt mit der Beleuchtungssteuerungsvorrichtung 25 funktionsverbunden sein kann. Dieser Fall ist beispielhaft in der Fig. 4 veranschaulicht. Im Falle einer in der Ankoppelungsgegenstelle 19 angeordneten Beleuchtungssteuerungsvorrichtung 25 kann ein am Handbediengerät 10 platziertes Eingabestellmittel 26 aber auch beispielsweise durch eine über das Kabel 21 geführte Funktionsverbindung mit der entsprechenden Beleuchtungssteuerungsvorrichtung 25 funktionsverbunden sein, wie dies exemplarisch in der Fig. 3 dargestellt ist. Wie ebenfalls in der Fig. 3 ersichtlich ist, können selbstverständlich zusätzlich entsprechende Eingabestellmittel 26 auch im Bereich einer Ankoppelungsgegenstelle 19 an einer möglichst gut zugänglichen Position platziert werden.

Generell, aber im Besonderen auch zur Abwendung von Fehlbedienungen betreffend die Leuchtintensität der Beleuchtungsvorrichtung 17, ist es vorgesehen, dass die zumindest eine Beleuchtungssteuerungsvorrichtung 25 zur elektrisch und/oder elektronisch gesteuerten Anpassung der visuell wahrnehmbaren Leuchtintensität der Beleuchtungsvorrichtung 17 innerhalb eines beschränkten Bereiches zwischen einer steuerungstechnisch vorgebbaren bzw. anpassbaren, minimalen Grenzintensität und einer steuerungstechnisch vorgebbaren bzw. anpassbaren, maximalen Grenzintensität ausgebildet ist. Die minimale und maximale Grenzintensität kann dabei jeweils festgelegt bzw. von der Beleuchtungssteuerungsvorrichtung 25 elektronisch lesbar zum Beispiel in einer Speichereinheit einer Steuerungsvorrichtung 6, 7 des Steuerungssystems 1 oder einer Speichereinheit der Beleuchtungssteuerungsvorrichtung 25 selbst hinterlegt sein. Alternativ kann aber auch vorgesehen sein, dass die Beleuchtungssteuerungsvorrichtung 25 zur steuerungstechnischen Vorgabe bzw. Anpassung der entsprechenden Grenzintensitäten für die Leuchtintensität ausgebildet ist. Dies kann beispielsweise auf Grundlage bzw. Basis von mit der Beleuchtungssteuerungsvorrichtung 25 verbundener Sensoren etc. erfolgen, wie nachfolgend noch näher erläutert wird. Wie in der Fig. 3 und auch der Fig. 4 dargestellt ist, kann das Steuerungssystem 1 zumindest ein Erfassungsmittel 27 zur Überwachung von Benutzeraktivitäten umfassen. Ein derartiges Erfassungsmittel 27 ist vorzugsweise an dem oder in dem Handbediengerät 10 selbst angeordnet, und kann beispielsweise Bewegungssensoren, Lage- und/oder Beschleunigungssensoren bzw. ein Gyroskop, optische Sensoren, oder auch Zeitmessvorrichtungen zur Überwachung einer Zeitüberschreitung für ein Nicht-Vorliegen von Benutzeraktivitäten, insbesondere von Benutzereingaben, umfassen. Entsprechend ausgestaltete Erfassungsmittel 27 können hierbei zur Signalisierung eines erfassten Vorliegens oder eines erfassten Nichtvorliegens von Benutzeraktivitäten gegenüber der zumindest einen Beleuchtungssteuerungsvorrichtung 25 ausgebildet sein.

In weiterer Folge kann die zumindest eine Beleuchtungssteuerungsvorrichtung 25 bei Vorliegen einer gekoppelten Signalverbindung 22 zwischen dem Sicherheitsschaltelement 15 und einer Steuerungsvorrichtung 6 bzw. einer Sicherheitssteuerung 7, und bei einer Signalisierung eines Vorliegens von Benutzeraktivitäten zur elektrisch und/oder elektronisch gesteuerten Anpassung der visuell wahrnehmbaren Leuchtintensität auf einen erstes, niedriges Niveau ausgebildet sein. Bei Vorliegen einer gekoppelten Signalverbindung 22 und bei einer Signalisierung eines Nichtvorliegens von Benutzeraktivitäten durch das Erfassungsmittel 27 kann die Beleuchtungssteuerungsvorrichtung 25 hingegen zur elektrisch und/oder elektronisch gesteuerten Anpassung der visuell wahrnehmbaren Leuchtintensität auf ein zweites, im Vergleich zum ersten Niveau, höheres Niveau ausgebildet sein. Im Letzteren Fall kann die Anpassung bzw. Einstellung des höheren, zweiten Leuchtintensitätsniveaus allenfalls auch nach Ablauf bzw. Verstreichen einer festlegbaren Zeitdauer nach Signalisierung eines Nichtvorliegens von Benutzeraktivitäten erfolgen.

Aufgrund der oftmals unterschiedlichen Ausleuchtung bzw. Umgebungshelligkeit von bzw. im Bereich von verschiedenen Anlagenkomponenten 3 kann eine Ausgestaltungsform des Steuerungssystems 1 von Vorteil sein, bei welcher der oder den Ankoppelungsgegenstelle(n) 19 eines Steuerungssystems 1 jeweils eine Kennung zugeordnet ist, welche Kennung datentechnische Informationen hinsichtlich einer minimalen Grenzintensität und/oder eines optimalen Niveaus für die visuell wahrnehmbare Leuchtintensität im Bereich der zugeordneten Anlagenkomponente 3 aufweist. Grundsätzlich kann eine derartige Kennung zum Beispiel durch eine datentechnisch in einer Speichereinheit einer Steuerungsvorrichtung 6 oder Sicherheitssteuerung 7 oder in einer Speichereinheit einer der jeweiligen Ankoppelungsgegenstelle 19 zugeordneten Beleuchtungssteuerungsvorrichtung 25 selbst hinterlegten datentechnischen Kennung gebildet sein. Dabei kann die Beleuchtungsteuerungsvorrichtung zur direkten Erfassung der Kennung durch datentechnisches Auslesen einer solchen Kennung aus der entsprechenden Speichereinheit ausgebildet sein.

Alternativ kann aber auch vorgesehen sein, dass die Beleuchtungssteuerungsvorrichtung zur indirekten Erfassung einer Kennung 28 via ein Kennungserfassungsmittel 29 ausgebildet ist. Wie in der Fig. 3 veranschaulicht ist, kann zum Beispiel vorgesehen sein, dass am Handbediengerät 10 ein Kennungserfassungsmittel 29 ausgebildet ist, welches je nach Art bzw. Ausbildung der Kennung 28 beispielsweise als Strichcode- oder 2D-Code-Reader, oder als RFID-Scanner und Dergleichen ausgebildet sein kann. Wie ebenfalls in der Fig. 3 veranschaulicht, kann eine entsprechend mit dem Kennungserfassungsmittel erfassbare Kennung 28, beispielsweise also ein Strich- oder 2D-Code, oder ein RFID-Transponder, am Ende im Bereich der Steckverbindung 23 des Kabels 21 angebracht sein. Beim Herstellen einer Signalverbindung 22, bei dem in der Fig. 3 gezeigten Ausführungsbeispiel über das Kabel 21, kann sodann die Kennung 28 mittels des Kennungserfassungsmittel 29 ausgelesen werden, und zum Beispiel via das Kabel 21 an die in der Ankoppelungsgegenstelle 19 angeordnete Beleuchtungssteuerungsvorrichtung 25 übertragen werden.

Nach Erfassen der Kennung 28, entweder direkt durch Auslesen aus einer Speichereinheit, oder indirekt via das Kennungserfassungsmittel 29, kann die Beleuchtungssteuerungsvorrichtung 25 zur elektrisch oder elektronisch gesteuerten Anpassung der visuell wahrnehmbaren Leuchtintensität auf Basis der datentechnischen Informationen der Kennung 28 ausgebildet sein. Dabei kann die Kennung 28 auch datentechnische Informationen über die bereits beschriebene minimale Grenzintensität und/oder die maximale Grenzintensität für die entsprechende Anlagenkomponente bzw. Ankoppelungsgegenstelle 19 aufweisen, bzw. gegenüber der Beleuchtungssteuerungsvorrichtung 25 bereitstellen.

Wie sowohl in der Fig. 3 als auch der Fig. 4 dargestellt ist, kann die zumindest eine Beleuchtungssteuerungsvorrichtung 25 ein erstes Schaltmittel 30 umfassen, und kann die Beleuchtungssteuerungsvorrichtung 25 zur Aktivierung respektive Deaktivierung der Beleuchtungsvorrichtung 17 durch Schalten des ersten Schaltmittels 30 in einen elektrisch leitenden respektive einen nichtleitenden Schaltzustand ausgebildet sein. Wie in der Fig. 3 veranschaulicht ist, kann dabei vorgesehen sein, dass eine in der Ankoppelungsgegenstelle 19 angeordnete Beleuchtungssteuerungsvorrichtung 25 zum Öffnen bzw. Schließen einer über das Kabel 21 geführten, elektrischen Stromversorgung 31 via das erste Schaltmittel 30 ausgebildet sein. Gemäß dem Ausführungsbeispiel in der Fig. 4 kann natürlich aber auch eine in einem Handbediengerät 10 angeordnete Beleuchtungssteuerungsvorrichtung 25 zum Öffnen bzw. Schließen einer internen Stromversorgung 31 für die Beleuchtungsvorrichtung 17 des Handbediengerätes 10 via das erste Schaltmittel 30 ausgebildet sein.

In beiden Fällen kann es weiters vorteilhaft sein, wenn die zumindest eine Beleuchtungssteuerungsvorrichtung 25 zur elektronischen Anpassung der visuell wahrnehmbaren Leuchtintensität der Beleuchtungsvorrichtung 17 durch Beaufschlagung des ersten Schaltmittels 30 mit einem pulsweitenmodulierten Ansteuerungssignal ausgebildet ist. Diese Ausbildungsvariante der Beleuchtungssteuerungsvorrichtung 25 erlaubt für dafür geeignete Beleuchtungsvorrichtungen 17, welche zum Beispiel durch Leuchtdioden bzw. LEDs gebildete Leuchtmittel aufweisen können, eine besonders energieeffiziente, elektronisch gesteuerte Anpassung der visuell wahrnehmbaren Leuchtintensität.

Ein derartiges, pulsweitenmoduliertes Ansteuerungssignal ist durch periodisch aufeinanderfolgende Pulsintervalle und Pauseintervalle gekennzeichnet. Während einem Pulsintervall schaltet die Beleuchtungssteuerungsvorrichtung 25 hierbei die elektrische Stromversorgung 31 via das erste Schaltmittel 30 leitend bzw. geschlossen, sodass die Beleuchtungsvorrichtung 17 während eines Pulsintervalls mit Strom versorgt ist, und dementsprechend leuchtet. Während einem Pauseintervall schaltet die Beleuchtungssteuerungsvorrichtung 25 die Stromversorgung 31 via das erste Schaltmittel 30 nichtleitend bzw. offen, sodass die Beleuchtungsvorrichtung 17 während eines Pauseintervalls nicht mit Strom versorgt ist, und dementsprechend nicht leuchtet. In anderen Worten ausgedrückt wird das pulsweitenmodulierte Ansteuerungssignal via das erste Schaltmittel 30 in die jeweilige elektrische Stromversorgung 31 bzw. die jeweilige Beleuchtungsvorrichtung 17, siehe Fig. 3 bzw. Fig. 4, eingekoppelt. Bei ausreichend kurzer Dauer bzw. ausreichend schneller Abfolge der Puls- und Pauseintervalle des pulsweitenmodulierten Ansteuerungssignals, nimmt das menschliche Auge hierbei nur die durchschnittlich emittierte Leuchtintensität der Beleuchtungsvorrichtung 17 als visuell wahrnehmbare bzw. visuell empfundene Leuchtintensität wahr. Insbesondere ist bei ausreichend schneller Abfolge der Puls- und Pauseintervalle, beispielweise bei Taktfrequenzen um die 10 kHz, für das menschliche Auge auch kein Flimmern der Beleuchtungsvorrichtung 17 wahrnehmbar.

In Hinsicht auf sicherheitstechnische Überlegungen kann zusätzlich vorgesehen sein, dass die zumindest eine Beleuchtungssteuerungsvorrichtung 25 zur Aktivierung respektive zur Deaktivierung der Beleuchtungsvorrichtung 17 ein zweites, schaltbares Schaltmittel 32 umfasst, welches zweite Schaltmittel 32 elektrisch in Serie mit dem ersten Schaltmittel 30 geschaltet ist. Dadurch kann auch bei einem Ausfall eines der Schaltmittel 30, 32 mittels des jeweils anderen Schaltmittels 30, 32 die Beleuchtungsvorrichtung 17 durch Unterbrechung deren Energie- bzw. Stromversorgung 31 zuverlässig abgeschaltet werden, wie dies auch in der Fig. 3 und der Fig. 4 veranschaulicht ist. Grundsätzlich kann die Beleuchtungssteuerungsvorrichtung 25 hierbei zur Schaltung beider Schaltmittel 30, 32 in einen nichtleitenden Zustand ausgebildet sein, wenn die Signalverbindung 22 zwischen dem Sicherheitsschaltelement 15 und der Steuerungsvorrichtung 6 bzw. Sicherheitssteuerung 7 gelöst ist. Die Beleuchtungssteuerungsvorrichtung 25 kann grundsätzlich auch zur Beaufschlagung des zweiten Schaltmittels 32 mit einem pulsweitenmodulierten Ansteuerungssignal ausgebildet sein.

Gemäß den Ausführungsbeispielen in der Fig. 3 und der Fig. 4, kann außerdem vorgesehen sein, dass der zumindest einen Beleuchtungssteuerungsvorrichtung 25 zumindest ein Überprüfungsmittel 33 zur Überprüfung des Leitungszustandes bzw. Schaltzustandes des oder der Schaltmittel(s) 30, 32 zugeordnet ist, und die Beleuchtungssteuerungsvorrichtung 25 bei Vorliegen eines deaktivierten Zustands der Beleuchtungsvorrichtung 17 zur Überprüfung des ordnungsgemäßen nichtleitenden Zustandes des oder der Schaltmittel 30, 32 mittels des zumindest einen Überprüfungsmittels 33 ausgebildet ist. Wie in der Fig. 3 und der Fig. 4 dargestellt kann das Überprüfungsmittel 33 hierbei beispielsweise durch ein in die elektrische Stromversorgung 31 eingebundenes Strommessmittel gebildet sein, mittels welchem überprüfbar ist, ob eine Beleuchtungsvorrichtung 17 mit Strom versorgt wird oder nicht. Alternativ sind auch andere Überprüfungsmittel 33 hierzu einsetzbar, beispielsweise Überprüfungsmittel 33 welche einen jeweiligen Schaltzustand des oder der Schaltmittel(s) 30, 32 direkt erfassen. Grundsätzlich ist auch eine direkte optische Erfassung des von der Beleuchtungsvorrichtung 17 emittierten Lichtes bzw. das Fehlen der Lichtemission denkbar, es kann das Überprüfungsmittel 33 also auch grundsätzlich durch eine lichtempfindliche Sensorvorrichtung gebildet sein. Der Einsatz derartiger, lichtempfindlicher Sensorvorrichtungen bzw. Sensormittel für das Steuerungssystem 1 wird im Folgenden noch näher erläutert.

In diesem Zusammenhang kann zum Beispiel auch vorgesehen sein, dass die zumindest eine Beleuchtungssteuerungsvorrichtung 25 zur Ausführung eines Testzyklus ausgebildet ist, welcher Testzyklus in periodischer Abfolge abwechselnd jeweils die Schaltung eines der Schaltmittel 30, 32 in einen nichtleitenden Zustand umfasst, und die gleichzeitige Schaltung des oder der anderen Schaltmittel 30, 32 in einen leitenden Zustand umfasst. Auf diese Weise kann die Beleuchtungssteuerungsvorrichtung 25 via das Überprüfungsmittel 33 zyklisch jedes einzelne Schaltmittel 30, 32 auf seine Funktionsfähigkeit überprüfen, bzw. kann die Beleuchtungssteuerungsvorrichtung 25 durch Ausführung eines dementsprechenden Testzyklus überprüfen, ob jedes der Schaltmittel 30, 32 in einen ordnungsgemäßen, nichtleitenden Zustand schaltbar ist.

Des Weiteren kann vorgesehen sein, dass der zumindest einen Beleuchtungssteuerungsvorrichtung 25 ein Signalverbindungszustandsüberprüfungsmittel 34 signaltechnisch zugeordnet ist, welches Signalverbindungszustandsüberprüfungsmittel 34 zur fortlaufenden Überprüfung des Koppelungszustands der Signalverbindung 22 ausgebildet ist, und dass die Beleuchtungssteuerungsvorrichtung 25 im Falle eines gekoppelten Zustands der Signalverbindung 22 zur Aktivierung der Beleuchtungsvorrichtung 17 ausgebildet ist, und im Falle eines gelösten Zustands der Signalverbindung 22 zur Deaktivierung der Beleuchtungsvorrichtung 17 ausgebildet ist. Derartige Signalverbindungszustandsüberprüfungsmittel 34 können dabei beispielsweise zur Detektion eines ordnungsgemäßen elektrischen Stromflusses bzw. Teststromes über die Signalverbindung 22 ausgebildet sein, beispielsweise einer über das Kabel 21 geführten Signalverbindung 22, wie dies beispielhaft anhand der in der Fig. 3 dargestellten Ausführungsform veranschaulicht ist. Alternativ ist auch ein Signalverbindungszustandsüberprüfungsmittel 34 denkbar, welches zur Überprüfung einer ordnungsgemäßen Signalübertragung über eine kabelgebundene Signalverbindung 22, oder wie in der Fig. 4 dargestellt ist, zur Überprüfung einer ordnungsgemäßen Signalübertragung über eine drahtlose Signalverbindung 22 ausgebildet ist. Bei kabelgebundenen Signalverbindungen 22 ist grundsätzlich auch möglich, einen hergestellten oder gelösten Zustand einer kabelgebundenen Signalverbindung 22 über die Erfassung einer hergestellten bzw. gekoppelten oder gelösten bzw. entkoppelten Steckverbindung 23 vorzunehmen, wie dies stark vereinfacht auch in der Fig. 3 dargestellt ist. Ein Signalverbindungszustandsüberprüfungsmittel 34 kann hierbei durch ein Kopplungszustandsüberprüfungsmittel 35 gebildet sein, beispielsweise einen magnetischen oder induktiven Sensor, oder einen optischen Sensor zur Erfassung, ob die Steckverbindung 23 hergestellt ist, oder gelöst ist, wie dies in der Fig. 3 gezeigt ist.

Wie weiters in der Fig. 3, aber auch in dem in der Fig. 4 dargestellten Ausführungsbeispiel veranschaulicht ist, kann die zumindest eine Beleuchtungssteuerungsvorrichtung 25 mit wenigstens einem ersten, leuchtintensitätssensitiven Sensormittel 36 datensignaltechnisch verbunden sein. Das dargestellte erste Sensormittel 36 kann baulich in einem Nahbereich des Sicherheitsschaltelementes 15 angeordnet sein, und zur Erfassung der Umgebungshelligkeit im Nahbereich des Sicherheitsschaltelementes 15 vorgesehen sein. Alternativ kann ein solches Sensormittel zur Erfassung der Umgebungshelligkeit auch innerhalb des Sicherheitsschaltelementes bzw. dessen Mantel angeordnet sein. Unabhängig davon kann das erste Sensormittel 36 derart an dem Handbediengerät 10 angeordnet sein, dass eine Lichterfassungsrichtung für das erste Sensormittel 36 von dem Sicherheitsschaltelement 15 wegweisend angeordnet ist, wie dies durch die Pfeile 37 in der Fig. 3 und der Fig. 4 angedeutet ist.

Durch die Erfassung der Umgebungshelligkeit kann für die Beleuchtungssteuerungsvorrichtung 25 vor allem fortlaufend eine Information zur optimierten Anpassung der visuell wahrnehmbaren Leuchtintensität der Beleuchtungsvorrichtung 17 bereitgestellt werden. Hierbei kann die zumindest eine Beleuchtungssteuerungsvorrichtung 25 zur automatischen, elektrischen oder elektronischen Anpassung der visuell wahrnehmbaren Leuchtintensität der Beleuchtungsvorrichtung 17 auf Basis der erfassten Umgebungshelligkeit ausgebildet sein. Ebenso kann die Beleuchtungssteuerungsvorrichtung 25 zur automatischen, dynamischen Vorgabe bzw. Anpassung einer minimalen Grenzintensität für die Beleuchtungsvorrichtung 17 auf Basis der erfassten Umgebungshelligkeit ausgebildet sein.

Im Besonderen kann vorgesehen sein, dass die Beleuchtungssteuerungsvorrichtung 25 bei einer detektierten Erhöhung der Umgebungshelligkeit zu einer regeltechnischen Erhöhung der visuell wahrnehmbaren Leuchtintensität der Beleuchtungsvorrichtung 17 und/oder zur Erhöhung der Vorgabe bzw. eines Vorgabewertes für die minimale Grenzintensität ausgebildet ist. Im Falle einer detektierten Abnahme der Umgebungshelligkeit via das erste Sensormittel 36 kann die Beleuchtungssteuerungsvorrichtung 25 dahingegen zur regeltechnischen Verringerung der visuell wahrnehmbaren Leuchtintensität der Beleuchtungsvorrichtung 17 und/oder zur Verringerung der Vorgabe bzw. eines Vorgabewertes für die minimale Grenzintensität ausgebildet sein.

In der Praxis kann die Be- bzw. Ausleuchtung der Umgebung eines Arbeitsplatzes bzw. einer Anlagenkomponente durch jede beliebige Art von Leuchtquelle erfolgen, wobei natürlich auch eine Mehrzahl an Leuchtquellen vorhanden sein kann. Dabei können beispielsweise auch Umgebungsausleuchtquellen zum Einsatz kommen, welche aufgrund ihrer Funktionsweise insbesondere bei Speisung mit Wechselnetzspannung periodischen Helligkeitsschwankungen unterliegen. Als Beispiele seien LED-Beleuchtungen, Quecksilberdampflampen oder Neonröhren genannt. In solchen Fällen kann vorgesehen sein, dass bei der Bestimmung der Umgebungshelligkeit eine rechnerische Glättung bzw. Filterung, oder eine rechnerische Mittelwertbildung über einen gewissen Beobachtungszeitraum, beispielsweise im Bereich von 200ms, bzw. über mehrere zeitlich aufeinanderfolgende Messpunkte erfolgt. Hierdurch können solche Umgebungshelligkeitsschwankungen rechnerisch ausgemittelt werden. Dadurch kann zum Beispiel hintangehalten werden, dass es durch umgebungungshelligkeitsabhängige Anpassung der visuell wahrnehmbaren Leuchtintensität der Beleuchtungsvorrichtung zu einem Flackern des beleuchteten Sicherheitsschaltelementes kommt.

Vorteilhaft ist in diesem Zusammenhang außerdem, wenn eine Abtastfrequenz, mit welcher die Umgebungshelligkeit erfasst wird, deutlich höher ist als die doppelte Netzfrequenz. Keinesfalls sollte die Erfassung der Umgebungshelligkeit mit einer Abtastrate erfolgen, welche der doppelten Netzfrequenz oder einer ganzzahlig geteilten Frequenz der doppelten Netzfrequenz entspricht, da es dann unter Umständen zu Schwebungseffekten bei der Erfassung der Umgebungshelligkeit kommen könnte.

Weiters kann in diesem Zusammenhang auch vorgesehen sein, dass Intensitätsänderungen der Beleuchtungsvorrichtung steuerungstechnisch stets nur langsam, mit einem rampenartigen Übergang im Bereich von einigen Sekunden erfolgen. Dadurch kann hintangehalten werden, dass etwa erfasste, niederfrequente periodische Helligkeitsänderungen der Umgebungshelligkeit, welche beispielsweise durch in der Nähe befindliche blinkende Signalleuchten verursacht sein können, durch die gesteuerte Anpassung der Leuchtintensität zu einem entsprechend als blinkend wahrnehmbaren Sicherheitsschaltelement führen können. Dadurch können Unsicherheiten bzw. eine mögliche Verwirrung bei wahrnehmenden Personen betreffend eine Bedeutung eines solchen, vermeintlichen Leuchtsignals hintangehalten werden.

Das erste Sensormittel 36 kann aber auch zur Erfassung von codierten Lichtsignalen ausgebildet sein bzw. herangezogen werden. Wie in der Fig. 4 schematisch veranschaulicht ist, kann das Steuerungssystem 1 hierzu wenigstens eine einer Anlagenkomponente ortsnah zugeordnete Lichtquelle 44 umfassen, welche Lichtquelle 44 zur Aussendung eines codierten Lichtsignales ausgebildet ist. Das erste leuchtintensitätssensitive Sensormittel 36 kann zur Erfassung und Bereitstellung gegenüber der Beleuchtungssteuerungsvorrichtung 25 des codierten Lichtsignals der Lichtquelle 44 ausgebildet sein.

In weiterer Folge kann zum Beispiel vorgesehen sein, dass die Beleuchtungssteuerungsvorrichtung 25 zur Bereitstellung einer Information über eine Erfassung eines codierten Lichtsignals gegenüber einer Steuerungsvorrichtung 6 und/oder einer Sicherheitssteuerung 7 ausgebildet ist, und dass die jeweilige Steuerungsvorrichtung 6 und/oder Sicherheitssteuerung 7 zur Freigabe wenigstens von beobachtungsrelevanten Steuerungskommandos nur im Falle einer Bereitstellung einer Information über eine Erfassung eines codierten Lichtsignals durch die Beleuchtungssteuerungsvorrichtung 25 ausgebildet ist.

Dadurch kann die Umgebung einer bestimmten Maschine bzw. Anlagenkomponente mit einem Lichtsignal mit einer anlagenspezifischen Codierung ausgeleuchtet werden. In weiterer Folge kann sichergestellt werden, dass bestimmte Bedienkommandos, insbesondere beobachtungsrelevante Steuerungskommandos nur ausführbar sind, solange sich die Bedienperson zumindest in Sichtweite der jeweiligen Anlagenkomponente befindet und die Wirkung ihrer Bedienhandlungen visuell erfassen und überwachen kann.

Die zumindest eine Beleuchtungssteuerungsvorrichtung 25 kann zusätzlich mit einem zweiten, leuchtintensitätssensitiven Sensormittel 38 datensignaltechnisch leitungsverbunden sein, welches zweite Sensormittel 38 zur Erfassung eines Istwerts der Leuchtintensität der Beleuchtungsvorrichtung 17 vorgesehen ist. Hierzu kann das zweite Sensormittel 38 wiederum baulich in einem Nahbereich des Sicherheitsschaltelementes 15 derart an dem Handbediengerät 10 angeordnet sein, dass eine Lichterfassungsrichtung für das zweite Sensormittel 38 zu dem Sicherheitsschaltelement 15 hinweisend angeordnet ist, wie dies durch die Pfeile 39 in der Fig. 3 und der Fig. 4 angedeutet ist. Alternativ ist wiederum eine Anordnung eines solchen zweiten Sensormittels innerhalb des Sicherheitsschaltelementes bzw. dessen Mantel möglich. Unabhängig davon kann durch das zweite Sensormittel 38 fortlaufend ein Istwert der von der Beleuchtungsvorrichtung 17 ausgesandten Leuchtintensität für die Beleuchtungssteuerungsvorrichtung 25 bereitgestellt werden.

In weiterer Folge kann die zumindest eine Beleuchtungssteuerungsvorrichtung 25 zum Vergleichen des erfassten Istwerts der Leuchtintensität der Beleuchtungsvorrichtung 17 mit einem intern festgelegten und/oder steuerungstechnisch generiertem Sollwert für die Leuchtintensität ausgebildet sein. Ein steuerungstechnisch generierter Sollwert kann hierbei zum Beispiel auf Basis bzw. in Abhängigkeit von einer detektierten bzw. mittels dem ersten, lichtempfindlichen Sensormittel 36 erfassten Umgebungshelligkeit generiert sein. In weiterer Folge kann die Beleuchtungssteuerungsvorrichtung 25 zum Beispiel auf Basis des Vergleiches bei Feststellung einer Überschreitung eines festgelegten Grenzwertes für eine zulässige Abweichung des Istwerts vom Sollwert zur Bereitstellung eines Sollwertfehlersignals gegenüber einer Steuerungsvorrichtung 6 und/oder einer Sicherheitssteuerung 7 des Steuerungssystems 1 ausgebildet sein. Dabei kann die Beleuchtungssteuerungsvorrichtung 25 natürlich sowohl bei Unterschreitung als auch bei Überschreitung des Sollwertes zur Bereitstellung des Sollwertfehlersignals sein. Grundsätzlich können in diesem Zusammenhang auch unterschiedliche, zulässige Abweichungen für eine Unterschreitung respektive Überschreitung des Sollwertes definiert sein.

In Zusammenhang mit der Erfassung des Istwerts der Leuchtintensität der Beleuchtungsvorrichtung 17 kann die zumindest eine Beleuchtungssteuerungsvorrichtung 25 grundsätzlich zum Vergleichen des erfassten Istwerts der Leuchtintensität der Beleuchtungsvorrichtung 17 mit einem intern festgelegten und/oder einem steuerungstechnisch generierten Sollwert für die Leuchtintensität ausgebildet sein. Bei einer vorteilhaften Weiterbildung kann auf Basis dieses Vergleiches die Beleuchtungssteuerungsvorrichtung 25 zur elektrischen und/oder elektronischen Nachregelung der visuell wahrnehmbaren Leuchtintensität der Beleuchtungsvorrichtung 17 ausgebildet sein. Durch diese Ausgestaltungsform können beispielsweise alterungsbedingte Abweichungen bei der Leuchtintensität der Beleuchtungsvorrichtung 17 automatisch bzw. regelungstechnisch mittels der Beleuchtungssteuerungsvorrichtung 25 korrigiert werden.

Wie bereits beschrieben, kann die zumindest eine Beleuchtungssteuerungsvorrichtung 25 zur Anpassung der visuell wahrnehmbaren Leuchtintensität durch Beaufschlagung der Beleuchtungsvorrichtung 17 mit einem pulsweitenmodulierten Ansteuerungssignal ausgebildet sein. In diesem Fall kann es zweckmäßig sein, wenn das zweite Sensormittel 38 zur Erfassung eines zeitlichen Verlaufes des durch die Beleuchtungsvorrichtung 17 emittierten, pulsweitenmodulierten Lichtes ausgebildet ist. Auf diese Weise kann via das zweite Sensormittel 38 für die Beleuchtungssteuerungsvorrichtung 25 ein Mittel zur Überprüfung der ordnungsgemäßen Funktion der Beleuchtungsvorrichtung 17 bereitgestellt werden. Hierbei kann die Beleuchtungssteuerungsvorrichtung 25 zum Vergleichen eines während eines Pulszeitintervalls des pulsweitenmodulierten Ansteuerungssignals erfassten Sensorsignals des zweiten Sensormittels 38 mit einem während eines Pausezeitintervalls des pulsweitenmodulierten Ansteuerungssignals erfassten Sensorsignals des zweiten Sensormittels 38 ausgebildet sein. In weiterer Folge kann die Beleuchtungssteuerungsvorrichtung 25 bei einem negativen Überprüfungsergebnis bzw. eines negativen Ergebnisses des Vergleiches, beispielsweise bei einer festgestellten Abweichung des zeitlichen Verlaufs der pulsweitenmodulierten Ansteuerungssignale und des zeitlichen Verlaufes des von der Beleuchtungsvorrichtung abgestrahlten pulsweitenmodulierten Lichtes, zur Bereitstellung eines Puls-Pause-Fehlersignals gegenüber einer Steuerungsvorrichtung 6 und/oder einer Sicherheitssteuerung 7 des Steuerungssystems 1 ausgebildet sein.

Die zumindest eine Beleuchtungssteuerungsvorrichtung 25 kann auch zum Vergleichen der von dem ersten Sensormittel 36 und/oder dem zweiten Sensormittel 38 bereitgestellten Sensordaten mit im Steuerungssystem 1 speicherbaren oder vorab abgespeicherten Referenzdaten ausgebildet sein. Solche Referenzdaten können beispielsweise in einer Speichereinheit einer Steuerungsvorrichtung 6 oder einer Sicherheitssteuerung 7 des Steuerungssystems 1 hinterlegt sein, und von der zumindest einen Beleuchtungssteuerungsvorrichtung 25 bei Herstellung einer Signalverbindung 22 zwischen dem Sicherheitsschaltelement 15 und der Steuerungsvorrichtung 6 bzw. Sicherheitssteuerung 7 elektronisch ausgelesen werden. Derartige Referenzdaten können beispielsweise aber auch durch Messdaten des ersten und/oder zweiten Sensormittels 36, 38 gebildet sein, welche für die Beleuchtungssteuerungsvorrichtung 25 während einer Benutzung des Handbediengerätes 10 bereitgestellt, und von der Beleuchtungssteuerungsvorrichtung 25 in einer Speichereinheit abgespeichert werden. Die Beleuchtungssteuerungsvorrichtung 25 bei einer Überschreitung einer zulässigen Abweichung der Sensordaten von den Referenzdaten zur Bereitstellung eines Abweichungsfehlersignals gegenüber einer Steuerungsvorrichtung 6 und/oder einer Sicherheitssteuerung 7 des Steuerungssystems 1 ausgebildet sein.

Die zumindest eine Beleuchtungssteuerungsvorrichtung 25 kann außerdem ein Strommessmittel 40 zur Bestimmung des von der Beleuchtungsvorrichtung 17 aufgenommenen, elektrischen Stromflusses umfassen, wie dies in der Fig. 3 und der Fig. 4 veranschaulicht ist. Ein solches Strommessmittel 40 kann beispielsweise durch einen Messumformer gebildet sein, welcher einen Messwert für die Beleuchtungssteuerungsvorrichtung 25 signal- bzw. datentechnisch bereitstellt. Die Beleuchtungssteuerungsvorrichtung 25 kann in weiterer Folge zum Vergleich der erfassten Stromflussmessdaten mit in einer Speichereinheit des Steuerungssystem 1 abgespeicherten Referenzdaten ausgebildet sein. Bei einer Überschreitung einer vorgegebenen Abweichung der bestimmten Stromflussdaten von den abgespeicherten Referenzdaten kann die Beleuchtungssteuerungsvorrichtung 25 sodann zur Bereitstellung eines Stromflussfehlersignals gegenüber einer Steuerungsvorrichtung 6 und/oder einer Sicherheitssteuerung 7 des Steuerungssystems 1 ausgebildet sein.

Bei einer Bereitstellung durch die Beleuchtungssteuerungsvorrichtung 25 eines der beschriebenen Fehlersignale, also beispielsweise eines Sollwert-, Puls-Pause-, Abweichungs- und/oder Stromflussfehlersignals, kann die entsprechende Steuerungsvorrichtung 6 bzw. die entsprechende Sicherheitssteuerung 7 zur umgehenden Überführung der Anlage 2 bzw. der betroffenen Anlagenkomponente 3 in einen sicheren Zustand ausgebildet sein. Dadurch kann ein Sicherheitsverlust der Anlage, beispielsweise durch Defekte an der Beleuchtungsvorrichtung 17 mit dem erhöhten Risiko eines Irrtums einer Person über die Wirksamkeit des Sicherheitsschaltelementes in einem etwaigen Notfall hintangehalten werden, bis zum Beispiel eine erforderliche Instandsetzung bzw. Reparaturmaßnahme durchgeführt wurde.

In diesem Zusammenhang kann auch vorgesehen sein, dass die Steuerungsvorrichtung 6 und/oder die Sicherheitssteuerung 7 zur signaltechnischen Einkopplung eines von der Beleuchtungssteuerungsvorrichtung 25 bereitgestellten Fehlersignals in signaläquivalenter Art zu einem manuell betätigten Sicherheitsschaltelement 15 in einen Sicherheitskreis 41 für die Anlage 2 oder die Anlagenkomponente 3 ausgebildet ist, wie dies stark vereinfacht und schematisch auch in der Fig. 3 und der Fig. 4 dargestellt ist.

Zusätzlich oder alternativ kann die entsprechende Steuerungsvorrichtung 6 bzw. die entsprechende Sicherheitssteuerung 7 bei Bereitstellung eines Fehlersignals durch die Beleuchtungssteuerungsvorrichtung 25 aber auch beispielsweise zur Sperre von sicherheitsrelevanten Steuerungskommandos, insbesondere durch Deaktivierung eines Zustimmsignals von einem im Handbediengerät integrierten Zustimmtaster, und/oder zum Beispiel zur Anzeige des Fehlersignals oder der Fehlersignale ausgebildet sein.

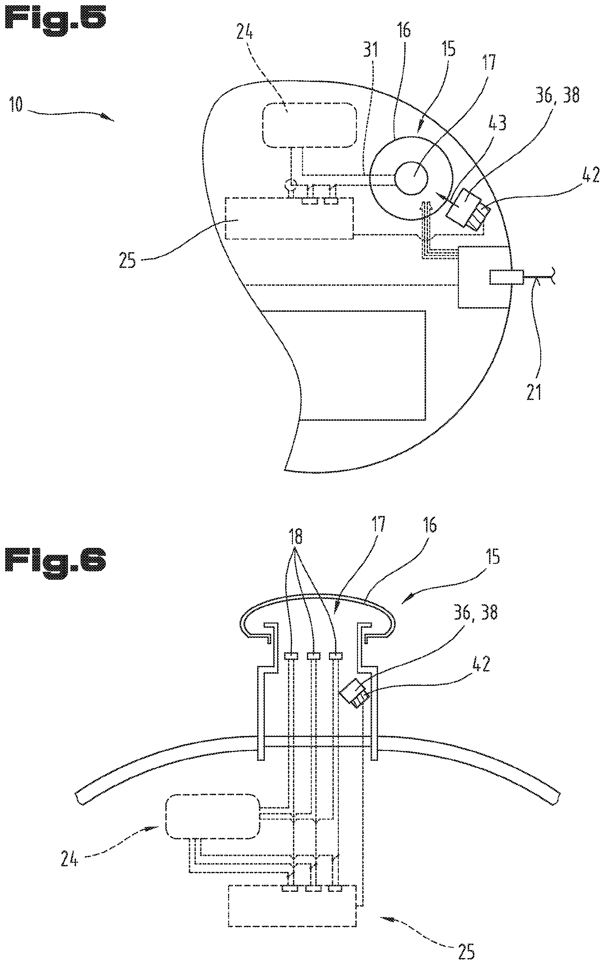

In der Fig. 5 ist eine weitere und gegebenenfalls für sich eigenständige Ausführungsform der/des Steuerungssystems 1 gezeigt, wobei wiederum für gleiche Teile gleiche Bezugszeichen bzw. Bauteilbezeichnungen wie in den vorangegangenen Fig. 1 bis Fig. 4 verwendet werden. Um unnötige Wiederholungen zu vermeiden, wird auf die detaillierte Beschreibung in den vorangegangenen Fig. 1 bis 4 hingewiesen bzw. Bezug genommen.

Die in der Fig. 5 dargestellte Ausgestaltungsvariante kann von Vorteil bei einer Ausbildung der zumindest einen Beleuchtungssteuerungsvorrichtung 25 zur Beaufschlagung der Beleuchtungsvorrichtung 17 mit einem pulsweitenmodulierten Ansteuerungssignal sein. Wie in der Fig. 5 veranschaulicht ist, kann in solchen Fällen vorgesehen sein, dass das erste Sensormittel 36 und das zweite Sensormittel 38 ein gemeinsames Intensitätserfassungselement 42 aufweisen, und dass die zumindest eine Beleuchtungssteuerungsvorrichtung 25 zur periodischen Abfrage des Intensitätserfassungselements 42 während Pulszeitintervallen und Pausezeitintervallen eines pulsweitenmodulierten Ansteuerungssignals für die Beleuchtungsvorrichtung 17 ausgebildet ist.

In anderen Worten ausgedrückt können das erste Sensormittel 36 und das zweite Sensormittel 38 baulich im Wesentlichen durch ein Sensormittel bzw. eine Sensorvorrichtung gebildet sein, welche in einem Nahbereich mit ihrer Lichterfassungsrichtung - durch Pfeil 43 angedeutet - in Richtung des Sicherheitsschaltelementes 15 ausgerichtet, angeordnet ist. Die Unterscheidung zwischen dem, zur Erfassung der Umgebungshelligkeit vorgesehenen, ersten Sensormittel 36, und dem zur Erfassung eines Istwerts der Leuchtintensität der Beleuchtungsvorrichtung vorgesehenen, zweiten Sensormittel 38 ist in diesem Falle durch die spezifische zeitlich aufeinanderfolgende Abfrage des gemeinsamen Intensitätserfassungselementes 42 durch die Beleuchtungssteuerungsvorrichtung 25 gegeben bzw. definiert. Da die Pulszeitintervalle und Pausenzeitintervalle von der Beleuchtungssteuerungsvorrichtung 25 vorgegeben werden und somit steuerungstechnisch bekannt bzw. vorgegeben sind, kann die Beleuchtungssteuerungsvorrichtung 25 zur entsprechenden zeitlich versetzten, aufeinanderfolgenden Abfrage des gemeinsamen Intensitätserfassungselementes 42 ausgebildet sein. Das erste und das zweite Sensormittel können daher in diesem Falle auch als virtuelles erstes Sensormittel 36 und virtuelles zweites Sensormittel 38 bezeichnet bzw. verstanden werden.

Insbesondere kann die zumindest eine Beleuchtungssteuerungsvorrichtung 25 zur Bestimmung der Umgebungshelligkeit aus den während Pausezeitintevallen abgefragten Sensordaten ausgebildet sein, da während der Pausezeitintervalle des pulsweitenmodulierten Ansteuerungssignals die Beleuchtungsvorrichtung 17 nicht mit Energie bzw. elektrischem Strom versorgt wird, und daher nicht leuchtet.

Alternativ zu den in den Fig. 2 bis Fig. 5 dargestellten Ausführungsbeispielen kann auch eine weitere, gegebenenfalls für sich eigenständige Ausführungsform zweckmäßig sein, welche in der Fig. 6 dargestellt ist. Es werden in der Fig. 6 wiederum für gleiche Teile gleiche Bezugszeichen bzw. Bauteilbezeichnungen wie in den vorangegangenen Fig. 1 bis Fig.5 verwendet. Um unnötige Wiederholungen zu vermeiden, wird auf die detaillierte Beschreibung in den vorangegangenen Fig. 1 bis 5 hingewiesen bzw. Bezug genommen.

Wie in der Fig. 6 dargestellt ist, kann das erste Sensormittel 36 und das zweite Sensormittel 38 bzw. das gemeinsame Intensitätserfassungselement 42 baulich innerhalb des Mantels 16 des Sicherheitsschaltelements 15 angeordnet sein. Dies stellt insbesondere eine baulich besonders effiziente und platzsparende Ausgestaltungform des Handbediengerätes 10 dar.

Generell kann die Leuchtintensität der Beleuchtungsvorrichtung 17 und auch die Umgebungshelligkeit prinzipiell entweder unmittelbar durch innerhalb des Sicherheitsschaltelementes 15 bzw. dessen Mantel 16 angeordneter Sensormittel 36, 38 erfasst werden, oder durch außerhalb angeordneten Sensormittel bzw. Sensorvorrichtungen nach Durchtritt durch den semitransparenten Mantel 16 des Sicherheitsschaltelementes 15 erfasst werden. Unabhängig von der Anordnung des ersten und zweiten Sensormittels 36, 38 bzw. dem gemeinsamen Intensitätserfassungselement 42 innerhalb oder außerhalb des Sicherheitsschaltelementes 15 bzw. dessen lichtdurchlässigen bzw. semitransparenten Mantel 16, kann die jeweils erfasste Leuchtintensität der Beleuchtungsvorrichtung 17 durch entsprechende, rechnerische Anpassung bzw. rechnerische Umwandlung der entsprechenden erfassten bzw. gemessenen Leuchtintensitäten in rechnerisch jeweils gut verwertbare, insbesondere digitale Werte skaliert bzw. rechnerisch angepasst werden. Insbesondere zur Berücksichtigung etwaiger Absorptions- bzw. Streuverluste durch den semitransparenten Mantel 16 im Falle außerhalb des Sicherheitsschaltelementes 15 angeordneter Sensormittel 38 bzw. Intensitätserfassungselemente 42, können gegebenenfalls auch rechnerische Kalibriermethoden zum Ausgleich angewendet werden.

Analog kann natürlich auch eine jeweilige Umgebungshelligkeit grundsätzlich durch ein innerhalb des semitransparenten Mantels 16 des Sicherheitsschaltelementes 15 angeordnetes Sensormittel 36 erfasst werden. Hierbei kann wiederum zum Erhalt der tatsächlichen Umgebungshelligkeit die durch den Mantel mittels eines Sensormittels 36 bzw. einem Intensitätserfassungselement 42 gemessene Helligkeit, welche allenfalls durch Absorptions- und/oder Lichtstreueffekte und Dergleichen von der tatsächlichen Umgebungshelligkeit abweicht, entsprechend rechnerisch angepasst bzw. korrigiert werden, etwa wiederum durch Anwendung von rechnerischen Kalibriermethoden oder Dergleichen.

Wie weiters in der Fig. 6 veranschaulich ist, kann die Beleuchtungsvorrichtung 17 mehrere, verschiedenfarbige Leuchtmittel 18 aufweisen. Bei einer solchen Ausgestaltungsform der Beleuchtungsvorrichtung 17 kann die zumindest eine Beleuchtungssteuerungsvorrichtung 25 zur separaten, elektrisch und/oder elektronisch gesteuerten Anpassung der einzelnen Leuchtmittel 18 ausgebildet sein, wie dies auch in der Fig. 6 schematisch veranschaulicht ist.

Schließlich kann auch eine Ausgestaltungsvariante vorgesehen sein, bei welcher die zumindest eine Beleuchtungssteuerungsvorrichtung 25 im Falle eines betätigten Sicherheitsschaltelements 15 zur elektrisch oder elektronisch gesteuerten Anpassung der Beleuchtungsvorrichtung 17 bzw. der einzelnen Leuchtmittel 18 durch ein Anzeigesignal, insbesondere durch ein visuell wahrnehmbares Blinksignal ausgebildet ist. Hierdurch sind jeweils individuell anpassbare bzw. regeltechnisch realisierbare Signalisierungsmöglichkeiten durch die Beleuchtungssteuerungsvorrichtung 25 ermöglicht, welche je nach erforderlicher und/oder jeweils gewünschter Ausführungsform durch die Beleuchtungssteuerungsvorrichtung 25 ausgeführt werden können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steuerungssystem | 30 | Schaltmittel |
| 2 | Anlage | 31 | Stromversorgung |
| 3 | Anlagenkomponente | 32 | Schaltmittel |
| 4 | Roboterbearbeitungsstation | 33 | Überprüfungsmittel |
| 5 | Lackierkammer | 34 | Signalverbindungszustandsüber-prüfungsmittel |
| 6 | Steuerungsvorrichtung | | |
| 7 | Sicherheitssteuerung | 35 | Kopplungszustandsüberprüfungs-mittel |
| 8 | Kommunikationsverbindung | | |
| 9 | Kommunikationsverbindung | 36 | Sensormittel |
| 10 | Handbediengerät | 37 | Pfeil |
| 11 | Ausgabemittel | 38 | Sensormittel |
| 12 | Bedienperson | 39 | Pfeil |
| 13 | Eingabemittel | 40 | Strommessmittel |
| 14 | Steuerung | 41 | Sicherheitskreis |
| 15 | Sicherheitsschaltelement | 42 | Intensitätserfassungselement |
| 16 | Mantel | 43 | Pfeil |
| 17 | Beleuchtungsvorrichtung | 44 | Lichtquelle |
| 18 | Leuchtmittel | | |
| 19 | Ankoppelungsgegenstelle | | |
| 20 | Funkverbindung | | |
| 21 | Kabel | | |
| 22 | Signalverbindung | | |
| 23 | Steckverbindung | | |
| 24 | Stromversorgungsmittel | | |
| 25 | Beleuchtungssteuerungsvorrichtung | | |
| 26 | Eingabestellmittel | | |
| 27 | Erfassungsmittel | | |
| 28 | Kennung | | |
| 29 | Kennungserfassungsmittel | | |

## Patentansprüche

1. Steuerungssystem (1) für elektrisch gesteuerte Anlagen (2), umfassend wenigstens eine Steuerungsvorrichtung (6) zur Überwachung und/oder Steuerung der Anlage (2) und/oder von Anlagenkomponenten (3),
zumindest ein tragbares, mobiles Handbediengerät (10) aufweisend Ausgabemittel (11) zur Anzeige von Informationen und Eingabemittel (13) zur Eingabe von Steuerungskommandos durch eine Bedienperson (12), wobei das Handbediengerät (10) wenigstens ein manuell betätigbares Sicherheitsschaltelement (15) aufweist, welchem Sicherheitsschaltelement (15) eine Beleuchtungsvorrichtung (17) mit wenigstens einem Leuchtmittel (18) zugeordnet ist,
und eine bedarfsweise koppelbare und lösbare Signalverbindung (22) zwischen dem Sicherheitsschaltelement (15) des Handbediengeräts (10) und der wenigstens einen Steuerungsvorrichtung (6) oder einer separat ausgebildeten Sicherheitssteuerung (7),
wobei das Steuerungssystem (1) bei Vorliegen einer gekoppelten Signalverbindung (22) und bei manueller Betätigung des Sicherheitsschaltelements (15) zur Überführung der Anlage (2) oder einer oder mehrerer Anlagenkomponenten (3) in einen sicheren Zustand ausgebildet ist, und wobei das Steuerungssystem (1) bei Vorliegen einer gekoppelten Signalverbindung (22) zur Aktivierung der Beleuchtungsvorrichtung (17) ausgebildet ist, und bei Vorliegen einer gelösten Signalverbindung (22) zur Deaktivierung der Beleuchtungsvorrichtung (17) ausgebildet ist,
**dadurch gekennzeichnet, dass**
es zumindest eine zur elektrisch und/oder elektronisch gesteuerten Anpassung einer visuell wahrnehmbaren Leuchtintensität der Beleuchtungsvorrichtung (17) innerhalb eines beschränkten Bereiches zwischen einer steuerungstechnisch vorgebbaren, minimalen Grenzintensität und einer steuerungstechnisch vorgebbaren, maximalen Grenzintensität bei Vorliegen einer gekoppelten Signalverbindung (22) zwischen dem Sicherheitsschaltelement (15) des Handbediengeräts (10) und der wenigstens einen Steuerungsvorrichtung (6) oder der Sicherheitssteuerung (7) ausgebildete Beleuchtungssteuerungsvorrichtung (25) umfasst.

2. Steuerungssystem nach Anspruch 1, **dadurch gekennzeichnet, dass** der zumindest einen Beleuchtungssteuerungsvorrichtung (25) wenigstens ein manuell verstellbares Eingabestellmittel (26) funktionswirksam zugeordnet ist, wobei die Beleuchtungssteuerungsvorrichtung (25) bei Vorliegen einer gekoppelten Signalverbindung (22) und bei Verstellung des Eingabestellmittels (26) durch eine Bedienperson (12) zur elektrisch und/oder elektronisch gesteuerten Anpassung der visuell wahrnehmbaren Leuchtintensität der Beleuchtungsvorrichtung (17) auf Basis einer jeweiligen Stellung des Eingabestellmittels (26) ausgebildet ist.

3. Steuerungssystem nach einem oder mehreren der vorhergehenden Ansprüche, **dadurch gekennzeichnet, dass** zumindest ein Erfassungsmittel (27) zur Überwachung von Benutzeraktivitäten an einem Handbediengerät (10) vorgesehen ist, welches Erfassungsmittel (27) zur Signalisierung eines erfassten Vorliegens oder eines erfassten Nichtvorliegens von Benutzeraktivitäten gegenüber der zumindest einen Beleuchtungssteuerungsvorrichtung (25) ausgebildet ist.

4. Steuerungssystem nach Anspruch 3, **dadurch gekennzeichnet, dass** die zumindest eine Beleuchtungssteuerungsvorrichtung (25) bei Vorliegen einer gekoppelten Signalverbindung (22) und bei einer Signalisierung eines Vorliegens von Benutzeraktivitäten zur elektrisch und/oder elektronisch gesteuerten Anpassung der visuell wahrnehmbaren Leuchtintensität auf einen erstes, niedriges Niveau ausgebildet ist, und bei Vorliegen einer gekoppelten Signalverbindung (22) und bei einer Signalisierung eines Nichtvorliegens von Benutzeraktivitäten zur elektrisch und/oder elektronisch gesteuerten Anpassung der visuell wahrnehmbaren Leuchtintensität auf ein zweites, im Vergleich zum ersten Niveau, höheres Niveau ausgebildet ist.

5. Steuerungssystem nach einem oder mehreren der vorhergehenden Ansprüche, **dadurch gekennzeichnet, dass** es wenigstens eine maschinenseitige Ankoppelungsgegenstelle (19) umfasst, welche einer elektrisch steuerbaren Anlagenkomponente (3) ortsnah zugeordnet ist, wobei die wenigstens eine Ankoppelungsgegenstelle (19) zumindest zur Herstellung und zum Lösen der Signalverbindung (22) zwischen dem wenigstens einen Sicherheitsschaltelement (15) des Handbediengeräts (10) und einer Steuerungsvorrichtung (6) der Anlage (2) und/oder Anlagenkomponente (3) ausgebildet ist.

6. Steuerungssystem nach Anspruch 5, **dadurch gekennzeichnet, dass** der wenigstens einen Ankoppelungsgegenstelle (19) eine Kennung (28) zugeordnet ist, welche Kennung (28) datentechnische Informationen hinsichtlich einer minimalen Grenzintensität und/oder eines optimalen Niveaus für die visuell wahrnehmbare Leuchtintensität im Bereich der zugeordneten Anlagenkomponente (3) aufweist, und die Beleuchtungsteuerungsvorrichtung (25) zur direkten Erfassung der Kennung oder zur indirekten Erfassung der Kennung (28) via ein Kennungserfassungsmittel (29), und zur elektrisch oder elektronisch gesteuerten Anpassung der visuell wahrnehmbaren Leuchtintensität auf Basis der datentechnischen Informationen der Kennung (28) ausgebildet ist.

7. Steuerungssystem nach einem oder mehreren der vorhergehenden Ansprüche, **dadurch gekennzeichnet, dass** die zumindest eine Beleuchtungssteuerungsvorrichtung (25) wenigstens ein erstes Schaltmittel (30) umfasst, und die Beleuchtungssteuerungsvorrichtung (25) zur Aktivierung respektive Deaktivierung der Beleuchtungsvorrichtung (17) durch Schalten des ersten Schaltmittels (30) in einen elektrisch leitenden respektive einen nichtleitenden Schaltzustand ausgebildet ist.

8. Steuerungssystem nach Anspruch 7, **dadurch gekennzeichnet, dass** die zumindest eine Beleuchtungssteuerungsvorrichtung (25) zur elektrisch und/oder elektronisch gesteuerten Anpassung der visuell wahrnehmbaren Leuchtintensität der Beleuchtungsvorrichtung (17) durch Beaufschlagung des ersten Schaltmittels (30) mit einem pulsweitenmodulierten Ansteuerungssignal ausgebildet ist.

9. Steuerungssystem nach einem oder mehreren der Ansprüche 5 bis 8, **dadurch gekennzeichnet, dass** die zumindest eine Beleuchtungssteuerungsvorrichtung (25) baulich in der maschinenseitigen Ankoppelungsgegenstelle (19) angeordnet ist.

10. Steuerungssystem nach einem oder mehreren der Ansprüche 1 bis 8, **dadurch gekennzeichnet, dass** die zumindest eine Beleuchtungssteuerungsvorrichtung (25) baulich in dem Handbediengerät (10) angeordnet ist.

11. Steuerungssystem nach einem oder mehreren der vorhergehenden Ansprüche, **dadurch gekennzeichnet, dass** die zumindest eine Beleuchtungssteuerungsvorrichtung (25) mit wenigstens einem ersten, leuchtintensitätssensitiven Sensormittel (36) datensignaltechnisch verbunden ist, welches erste Sensormittel (36) baulich in einem Nahbereich des Sicherheitsschaltelementes (15) oder innerhalb des Sicherheitsschaltelementes (15) angeordnet ist, und welches erste Sensormittel (36) zur Erfassung der Umgebungshelligkeit im Nahbereich des Sicherheitsschaltelementes (15) vorgesehen ist.

12. Steuerungssystem nach Anspruch 11, **dadurch gekennzeichnet, dass** die zumindest eine Beleuchtungssteuerungsvorrichtung (25) zur automatischen, elektrisch oder elektronisch gesteuerten Anpassung der visuell wahrnehmbaren Leuchtintensität der Beleuchtungsvorrichtung (17) auf Basis der erfassten Umgebungshelligkeit ausgebildet ist, und/oder zur automatischen, dynamischen Vorgabe einer minimalen Grenzintensität für die Beleuchtungsvorrichtung (17) auf Basis der erfassten Umgebungshelligkeit ausgebildet ist.

13. Steuerungssystem nach einem der Ansprüche 11 oder 12, **dadurch gekennzeichnet, dass** die zumindest eine Beleuchtungssteuerungsvorrichtung (25) mit einem zweiten, leuchtintensitätssensitiven Sensormittel (38) datensignaltechnisch leitungsverbunden ist, welches zweite Sensormittel (38) baulich in einem Nahbereich des Sicherheitsschaltelementes (15) oder innerhalb des Sicherheitsschaltelementes (15) angeordnet ist und zur Erfassung eines Istwerts der Leuchtintensität der Beleuchtungsvorrichtung (17) ausgebildet ist.

14. Steuerungssystem nach Anspruch 13, **dadurch gekennzeichnet, dass** die zumindest eine Beleuchtungssteuerungsvorrichtung (25) zum Vergleichen des erfassten Istwerts der Leuchtintensität der Beleuchtungsvorrichtung (17) mit einem intern festgelegten und/oder einem steuerungstechnisch generierten Sollwert für die Leuchtintensität ausgebildet ist, und dass die Beleuchtungssteuerungsvorrichtung (25) auf Basis des Vergleiches zur elektrischen und/oder elektronischen Nachregelung der visuell wahrnehmbaren Leuchtintensität der Beleuchtungsvorrichtung (17) ausgebildet ist.

15. Steuerungssystem nach einem oder mehreren der Ansprüche 8 bis 14, **dadurch gekennzeichnet, dass** das erste Sensormittel (36) und das zweite Sensormittel (38) ein gemeinsames Intensitätserfassungselement (42) aufweisen, und dass die zumindest eine Beleuchtungssteuerungsvorrichtung (25) zur periodischen Abfrage des Intensitätserfassungselements (42) während Pulszeitintervallen und Pausezeitintervallen eines pulsweitenmodulierten Ansteuerungssignals für die Beleuchtungsvorrichtung (17) ausgebildet ist.

16. Steuerungssystem nach Anspruch 15, **dadurch gekennzeichnet, dass** die zumindest eine Beleuchtungssteuerungsvorrichtung (25) zur Bestimmung der Umgebungshelligkeit aus den während Pausezeitintevallen abgefragten Sensordaten ausgebildet ist.

17. Steuerungssystem nach einem oder mehreren der vorhergehenden Ansprüche, **dadurch gekennzeichnet, dass** die Beleuchtungsvorrichtung (17) mehrere, verschiedenfarbige Leuchtmittel (18) aufweist, und dass die zumindest eine Beleuchtungssteuerungsvorrichtung (25) zur separaten, elektrisch und/oder elektronisch gesteuerten Anpassung der einzelnen Leuchtmittel (18) ausgebildet ist.

## Claims

1. A control system (1) for electrically controlled installations (2), comprising at least one control device (6) for monitoring and/or controlling the installation (2) and/or installation components (3),
at least one portable, mobile hand-held terminal (10) comprising output means (11) for displaying information and input means (13) for the input of control commands by an operator (12), wherein the hand-held terminal (10) is provided with at least one manually actuatable safety switching element (15), with which safety switching element (15) a lighting device (17) having at least one lighting means (18) is associated, and, between the safety switching element (15) of the hand-held terminal (10) and the at least one control device (6) or a separately formed safety controller (7), a signal connection (22), which may be coupled or released as needed,
wherein the control system (1) is configured for transferring the installation (2) or one or more installation components (3) into a safe state upon presence of a coupled signal connection (22) and upon manual actuation of the safety switching element (15),
and wherein the control system (1) is configured for activating the lighting device (17) upon presence of a coupled signal connection (22) and for deactivating the lighting device (17) upon presence of a released signal connection (22),
**characterized in that**
it comprises at least one lighting control device (25), which is configured for the electrically and/or electronically controlled adaptation of a visually perceptible light intensity of the lighting device (17) within a limited region between a minimum limit intensity that can be predefined by control technology and a maximum limit intensity that can be predefined by control technology, upon presence of a coupled signal connection (22) between the safety switching element (15) of the hand-held terminal (10) and the at least one control device (6) or the safety controller (7).

2. The control system according to claim 1, **characterized in that** at least one manually adjustable input adjusting means (26) is associated functionally effectively with the at least one lighting control device (25), wherein the lighting control device (25) is configured for the electrically and/or electronically controlled adaptation, on the basis of the respective position of the input adjusting means (26), of the visually perceptible light intensity of the lighting device (17) upon presence of a coupled signal connection (22) and upon displacement of the input adjusting means (26) by an operator (12).

3. The control system according to one or multiple of the preceding claims, **characterized in that** at least one detection means (27) for monitoring user activities is provided on a hand-held terminal (10), which detection means (27) is configured for signaling a detected presence or a detected absence of user activities relative to the at least one lighting control device (25).

4. The control system according to claim 3, **characterized in that** the at least one lighting control device (25) is configured for the electrically and/or electronically controlled adaptation of the visually perceptible light intensity to a first low level upon presence of a coupled signal connection (22) and during a signaling of a presence of user activities, and is configured for the electrically and/or electronically controlled adaptation of the visually perceptible light intensity to a second level that is higher in comparison with the first level, upon presence of a coupled signal connection (22) and during a signaling of an absence of user activities.

5. The control system according to one or more of the preceding claims, **characterized in that** it comprises at least one machine-side coupling counterpart (19), which is assigned locally to an electrically controllable installation component (3), wherein the at least one coupling counterpart (19) is configured at least for creating and for releasing the signal connection (22) between the at least one safety switching element (15) of the hand-held terminal (10) and a control device (6) of the installation (2) and/or installation component (3).

6. The control system according to claim 5, **characterized in that** the at least one coupling counterpart (19) is assigned an identifier (28), which identifier (28) contains data technical information with respect to a minimum limit intensity and/or an optimum level for the visually perceptible light intensity in the region of the associated installation component (3), and the lighting control device (25) is configured for the direct detection of the identifier or for the indirect detection of the identifier (28) via an identifier-detection means (29), and for the electrically and/or electronically controlled adaptation of the visually perceptible light intensity on the basis of the data technical information about the identifier (28).

7. The control system according to one or more of the preceding claims, **characterized in that** the at least one lighting control device (25) comprises at least one first switching means (30), and the lighting control device (25) is configured for activating or deactivating the lighting device (17) by switching the first switching means (30) to an electrically conducting or an electrically non-conducting switched state.

8. The control system according to claim 7, **characterized in that** the at least one lighting control device (25) is configured for the electrically and/or electronically controlled adaptation of the visually perceptible light intensity of the lighting device (17) by subjecting the first switching means (30) to a pulse width modulated control signal.

9. The control system according to one or multiple ones of claims 5 to 8, **characterized in that** the at least one lighting control device (25) is structurally arranged in the machine-side coupling counterpart (19).

10. The control system according to one or multiple ones of claims 1 to 8, **characterized in that** the at least one lighting control device (25) is structurally arranged in the hand-held terminal (10).

11. The control system according to one or more of the preceding claims, **characterized in that** the at least one lighting control device (25) is data signal technically connected to at least one first sensor means (36) sensitive to light intensity, which first sensor means (36) is structurally arranged in a region close to the safety switching element (15) or inside the safety switching element (15), and which first sensor means (36) is provided for detecting the ambient brightness in a vicinity of the safety switching element (15).

12. The control system according to claim 11, **characterized in that** the at least one lighting control device (25) is configured for the automatic, electrically and/or electronically controlled adaptation of the visually perceptible light intensity of the lighting device (17) on the basis of the detected ambient brightness, and/or is configured for automatically, dynamically predetermining a minimum limit intensity for the lighting device (17) on the basis of the detected ambient brightness.

13. The control system according to one of claims 11 or 12, **characterized in that** the at least one lighting control device (25) is line-connected in a data-signal technical manner to a second sensor means (38) sensitive to light intensity, which second sensor means (38) is structurally arranged in a vicinity of the safety switching element (15) or inside the safety switching element (15), and is configured for detecting an actual value of the light intensity of the lighting device (17).

14. The control system according to claim 13, **characterized in that** the at least one lighting control device (25) is configured for comparing the detected actual value of the light intensity of the lighting device (17) with a light intensity target value that is internally defined and/or generated using control technology, and that the lighting control device (25) is configured, on the basis of the comparison, for the electrical and/or electronic correction of the visually perceptible light intensity of the lighting device (17).

15. The control system according to one or more of claims 8 to 14, **characterized in that** the first sensor means (36) and the second sensor means (38) have a common intensity detection element (42), and that the at least one lighting control device (25) is configured for the periodic query of the intensity detection element (42) during pulse time intervals and pause time intervals of a pulse width modulated control signal for the lighting device (17).

16. The control system according to claim 15, **characterized in that** the at least one lighting control device (25) is configured for determining of the ambient brightness from the sensor data requested during pause time intervals.

17. The control system according to one or more of the preceding claims, **characterized in that** the lighting device (17) has multiple differently colored lighting means (18) and that the at least one lighting control device (25) is configured for the separate electrically and/or electronically controlled adaptation of the individual lighting means (18).

## Revendications

1. Système de commande (1) pour des installations contrôlées électriquement (2), comprenant au moins un dispositif de commande (6) pour la surveillance et/ou le contrôle de l'installation (2) et de composants de l'installation (3),
au moins un appareil de commande manuel portatif mobile (10) comprenant des moyens de sortie (11) pour l'affichage d'informations et des moyens d'entrée (13) pour l'entrée de commandes par un opérateur (12), dans lequel l'appareil de commande manuel (10) comprend au moins un élément de commutation de sécurité (15) actionnable manuellement, un dispositif d'éclairage (17) avec au moins un moyen d'éclairage (18) correspondant à cet élément de commutation de sécurité (15),
et une liaison de signaux (22), pouvant être couplée et découplée selon les besoins, entre l'élément de commutation de sécurité (15) de l'appareil de commande manuel (10) et l'au moins un dispositif de commande (6) ou une commande de sécurité (7) séparée, dans lequel le système de commande (1) est conçu pour faire passer, lors de l'existence d'une liaison de signaux couplée (22) et lors de l'actionnement manuel de l'élément de commutation de sécurité (15), l'installation (2) ou un des composants de l'installation (3) dans un état sécurisé,
et dans lequel le système de commande (1) est conçu, lors de l'existence d'une liaison de signaux couplée (22), pour l'activation du dispositif d'éclairage (17) et, lors de l'existence d'une liaison de signaux découplée (22), pour la désactivation du dispositif d'éclairage (17),
**caractérisé en ce que**
il comprend au moins un dispositif de commande d'éclairage (25) conçu pour l'adaptation contrôlée électriquement et/ou électroniquement d'une intensité lumineuse perceptible visuellement du dispositif d'éclairage (17) à l'intérieur d'une plage limitée entre une intensité limite minimale pouvant être prédéterminée par la commande et une intensité limite maximale pouvant être prédéterminée par la commande, lors de l'existence d'une liaison de signaux couplée (22) entre l'élément de commutation de sécurité (15) de l'appareil de commande manuel (10) et l'au moins un dispositif de commande (6) ou la commande de sécurité (7).

2. Système de commande selon la revendication 1, **caractérisé en ce que**, à l'au moins un dispositif de commande d'éclairage (25) correspond fonctionnellement au moins un moyen de réglage d'entrée réglable manuellement (26), dans lequel le dispositif de commande d'éclairage (25) est conçu, lors de l'existence d'une liaison de signaux couplée (22) et lors d'un réglage du moyen de réglage d'entrée (26) par un opérateur (12), pour l'adaptation contrôlée électriquement et/ou électroniquement de l'intensité lumineuse perceptible visuellement du dispositif d'éclairage (17) sur la base d'une position respective du moyen de réglage d'entrée (26).

3. Système de commande selon l'une ou plusieurs des revendications précédentes, **caractérisé en ce qu'**au moins un moyen de détection (27) est prévu pour la surveillance d'activités d'utilisateurs sur un appareil de commande manuel (10), ce moyen de détection (27) étant conçu pour la signalisation d'une existence détectée ou d'une non-existence détectée d'activités d'utilisateurs par rapport à l'au moins un dispositif de commande d'éclairage (25).

4. Système de commande selon la revendication 3, **caractérisé en ce que** l'au moins un dispositif de commande d'éclairage (25) est conçu, lors de l'existence d'une liaison de signaux couplée (22) et lors d'une signalisation d'une existence d'activités d'utilisateurs, pour l'adaptation contrôlée électriquement et/ou électroniquement de l'intensité lumineuse perceptible visuellement à un premier niveau plus bas et, lors de l'existence d'une liaison de signaux couplée (22) et lors d'une signalisation d'une non-existence d'activités d'utilisateurs, pour l'adaptation contrôlée électriquement et/ou électroniquement de l'intensité lumineuse perceptible visuellement à un deuxième niveau plus élevé que le premier niveau.

5. Système de commande selon l'une ou plusieurs des revendications précédentes, **caractérisé en ce qu'**il comprend au moins un poste distant de couplage côté machine (19), qui correspond à un composant d'installation proche contrôlable électriquement (3), dans lequel l'au moins un poste distant de couplage (19) est conçu au moins pour l'établissement et l'annulation de la liaison de signaux (22) entre l'au moins un élément de commutation de sécurité (15) de l'appareil de commande manuel (10) et un dispositif de commande (6) de l'installation (2) et/ou du composant de l'installation (3).

6. Système de commande selon la revendication 5, **caractérisé en ce que**, à l'au moins un poste distance de couplage (19), correspond un identifiant (28), cet identifiant (28) comprenant des informations techniques de données concernant une intensité limite minimale et/ou un niveau optimal pour l'intensité lumineuse perceptible visuellement au niveau du composant d'installation (3) correspondant, et le dispositif de commande d'éclairage (25) est conçu pour la détection directe de l'identifiant ou pour la détection indirecte de l'identifiant (28) via un moyen de détection d'identifiant (29), et pour l'adaptation contrôlée électriquement et/ou électroniquement de l'intensité lumineuse perceptible visuellement sur la base des informations techniques de données de l'identifiant (28).

7. Système de commande selon l'une ou plusieurs des revendications précédentes, **caractérisé en ce que** l'au moins un dispositif de commande d'éclairage (25) comprend au moins un premier moyen de commutation (30) et le dispositif de commande d'éclairage (25) est conçu pour l'activation respectivement la désactivation du dispositif d'éclairage (17) par la commutation du premier moyen de commutation (30) vers un état de commutation électro-conducteur respectivement non électro-conducteur.

8. Système de commande selon la revendication 7, **caractérisé en ce que** l'au moins un dispositif de commande d'éclairage (25) est conçu pour l'adaptation contrôlée électriquement et/ou électroniquement de l'intensité lumineuse perceptible visuellement du dispositif d'éclairage (17) par l'alimentation du premier moyen de commutation (30) avec un signal de commande modulé par largeurs d'impulsions.

9. Système de commande selon l'une ou plusieurs des revendications 5 à 8, **caractérisé en ce que** l'au moins un dispositif de commande d'éclairage (25) est intégré dans le poste distant de couplage côté machine (19).

10. Système de commande selon l'une ou plusieurs des revendications 1 à 8, **caractérisé en ce que** l'au moins un dispositif de commande d'éclairage (25) est intégré dans l'appareil de commande manuel (10).

11. Système de commande selon l'une ou plusieurs des revendications précédentes, **caractérisé en ce que** l'au moins un dispositif de commande d'éclairage (25) est relié par des signaux de données avec au moins un premier moyen de capteur sensible à l'intensité lumineuse (36), ce premier moyen de capteur (36) étant intégré à proximité de l'élément de commutation de sécurité (15) ou disposé à l'intérieur de l'élément de commutation de sécurité (15) et ce premier moyen de capteur (36) étant conçu pour la mesure de la luminosité ambiante à proximité de l'élément de commutation de sécurité (15).

12. Système de commande selon la revendication 11, **caractérisé en ce que** l'au moins un dispositif de commande d'éclairage (25) est conçu pour l'adaptation automatique, contrôlée électriquement et/ou électroniquement de l'intensité lumineuse perceptible visuellement du dispositif d'éclairage (17) sur la base de la luminosité ambiante mesurée et/ou pour la détermination automatique dynamique d'une intensité limite minimale pour le dispositif d'éclairage (17) sur la base de la luminosité ambiante mesurée.

13. Système de commande selon l'une des revendications 11 ou 12, **caractérisé en ce que** l'au moins un dispositif de commande d'éclairage (25) est relié par des signaux de données avec un deuxième moyen de capteur sensible à l'intensité lumineuse (38), ce deuxième moyen de capteur (38) étant intégré à proximité de l'élément de commutation de sécurité (15) ou disposé à l'intérieur de l'élément de commutation de sécurité (15) et pour la mesure d'une valeur réelle de l'intensité lumineuse du dispositif d'éclairage (17).

14. Système de commande selon la revendication 13, **caractérisé en ce que** l'au moins un dispositif de commande d'éclairage (25) est conçu pour la comparaison de la valeur réelle mesurée de l'intensité lumineuse du dispositif d'éclairage (17) avec une valeur de consigne pour l'intensité lumineuse, déterminée en interne et/ou générée par la commande et **en ce que** le dispositif de commande d'éclairage (25) est conçu pour la régulation électrique et/ou électronique de l'intensité lumineuse perceptible visuellement du dispositif d'éclairage (17) sur la base de la comparaison.

15. Système de commande selon l'une des revendications 8 à 14, **caractérisé en ce que** le premier moyen de capteur (36) et le deuxième moyen de capteur (38) comprennent un élément de mesure d'intensité commun (42) et **en ce que** l'au moins un dispositif de commande d'éclairage (25) est conçu pour la lecture périodique de l'élément de mesure d'intensité (42) pendant des intervalles d'impulsions et des intervalles de pauses d'un signal de commande modulé par largeurs d'impulsions pour le dispositif d'éclairage (17).

16. Système de commande selon la revendication 15, **caractérisé en ce que** l'au moins un dispositif de commande d'éclairage (25) est conçu pour la détermination de la luminosité ambiante à partir des données de capteurs lues pendant les intervalles de pauses.

17. Système de commande selon l'une ou plusieurs des revendications précédentes, **caractérisé en ce que** le dispositif d'éclairage (17) comprend plusieurs moyens d'éclairage (18) de différentes couleurs, et **en ce que** l'au moins un dispositif de commande d'éclairage (25) est conçu pour l'adaptation séparée, contrôlée électriquement et/ou électroniquement des différents moyens d'éclairage (18).
